# EUROPÄISCHE PATENTSCHRIFT

(11) **EP 2 831 985 B1**
(45) Veröffentlichungstag und Bekanntmachung des Hinweises auf die Patenterteilung: **28.06.2017**
(21) Anmeldenummer: 13704957.3
(22) Anmeldetag: 19.02.2013
(51) Int. Cl.: H02K 41/03, H02K 11/00

(54) **STATORVORRICHTUNG FÜR EINEN LINEARMOTOR UND LINEARES TRANSPORTSYSTEM**
STATOR DEVICE FOR A LINEAR MOTOR AND LINEAR TRANSPORT SYSTEM
DISPOSITIF STATOR POUR UN MOTEUR LINÉAIRE, ET SYSTÈME DE TRANSPORT LINÉAIRE

(30) Priorität: 27.03.2012 DE 102012204919
(43) Veröffentlichungstag der Anmeldung: 04.02.2015
(60) Teilanmeldung: 15151120.1
(73) Patentinhaber: Beckhoff Automation GmbH, 33415 Verl (DE)
(72) Erfinder: ACHTERBERG, Jan, 47249 Duisburg (DE); PRÜSSMEIER, Uwe, 32657 Lemgo (DE)
(74) Vertreter: Patentanwaltskanzlei WILHELM & BECK
(86) Internationale Anmeldenummer: PCT/EP2013/053273
(87) Internationale Veröffentlichungsnummer: WO 2013/143783

(56) Entgegenhaltungen:
- EP-A1- 1 758 231
- JP-A- 2010 074 977
- US-A- 5 701 042
- US-A1- 2008 036 305

## Beschreibung

Die Erfindung betrifft eine Statorvorrichtung für einen Linearmotor. Die Erfindung betrifft ferner ein lineares Transportsystem.

Aus der Offenlegungsschrift WO 96/27544 ist eine Vorrichtung zum Transportieren von Produkten zwischen verschiedenen Stationen bekannt. Hierbei ist ein Wagen vorgesehen, welcher ein U-förmiges Joch aufweist, wobei an den Innenseiten des Jochs Permanentmagnete gebildet sind. Zwischen dem Joch sind mehrere Luftspulen angeordnet, welche auf einer Trägerplatte gesetzt sind. Bei einer elektrischen Bestromung der Luftspulen bildet sich ein Magnetfeld aus, welches mit dem entsprechenden Magnetfeld der Permanentmagnete des Jochs wechselwirkt, so dass der Wagen eine translatorische Bewegung erfährt. Die Luftspulen bilden einen Luftspalt zwischen den Permanentmagneten. Dieser Spalt muss gering gehalten werden um eine gute Kraftwirkung zu erzielen. Die mechanische Festigkeit steht dem entgegen und lässt keine gute Festigkeit zu. Die mechanische Führung kann so nicht mit der Spulenanordnung kombiniert werden. Ferner weisen Luftspulen den Nachteil hoher magnetischer Streuverluste auf, insbesondere bei größeren Abmessungen. In der Regel sind Luftspulen durch eine geringere Induktivität gekennzeichnet, was bei gleichem Aufbau und gleicher Ansteuerung zu einer geringeren Vorschubskraft führt.

Aus der Patentschrift US 6,876,107 B2 ist ein Transportsystem bekannt. Hierbei ist ein Schlitten mit einem U-förmigen Joch vorgesehen, wobei an Innenseiten des U-förmigen Jochs Permanentmagnete angeordnet sind. Innerhalb des U-förmigen Jochs sind zwei gegenüberliegende Spulen gebildet. Bei einer entsprechenden Bestromung der Spulen bildet sich ein Magnetfeld aus, welches mit dem Magnetfeld der Permanentmagnete wechselwirkt, so dass der Schlitten eine translatorische Bewegung durchführt. Aufgrund der hohen Anzahl an benötigten Spulen weist ein derartiger Aufbau eine hohe Komplexität auf, was zu hohen Kosten für die Bauteile und deren Verdrahtung etc. führt. Zudem bedingt ein derartiger Aufbau einen erheblichen Bauraumbedarf.

Nachteilig an den bekannten Systemen ist also insbesondere, dass sie erheblich großen Bauraum benötigen und mechanische Instabilitäten aufweisen, was beispielsweise im Betrieb zu störenden Vibrationen führen kann. Darüber hinaus weisen die bekannten Systeme auch die im Zusammenhang mit Luftspulen beschriebenen obigen Nachteile auf.

Ferner weisen die bekannten Systeme im Zusammenhang mit Führungen für die Schlitten bzw. Fahrzeuge Nachteile auf. So ist beispielsweise in der Patentschrift US 6,876,107 B2 eine Schiene als Führung vorgesehen, welche direkt in eine Trägervorrichtung der Spulen integriert ist. Das heißt also insbesondere, dass, wenn sich die Schienen aufgrund von Verschleiß abnutzen und folglich ersetzt werden müssen, ein kompletter Austausch der Trägervorrichtung mit den Spulen notwendig ist. Ferner ist es hier auch nicht möglich, unterschiedliche Schienen je nach Anwendungsfall, also beispielsweise für ein spezifisches Fahrzeug, vorzusehen, ohne dabei auch gleichzeitig die Trägervorrichtung mit den Spulen auszutauschen.

In der Offenlegungsschrift WO 96/27544 sind die Schienen für Laufrollen des Fahrzeugs bzw. des Wagens oder Schlittens unabhängig von den Luftspulen angeordnet, wobei die Luftspulen auf einer Trägerplatte aufgeleimt sind. Ein Einbau und eine Justage eines Abstands zwischen den Schienen und den Luftspulen sind aufgrund dieser unabhängigen Befestigung bzw. Anordnung schwierig. Das kann beispielsweise zur Folge haben, dass ein Abstand zwischen den Schienen und den Luftspulen nicht optimal eingestellt werden kann, was folglich insbesondere zu einem erhöhten Verschleiß und/oder einer niedrigeren Motorvorschubkraft führen kann.

Die Offenlegungsschrift JP 06165475 A zeigt einen Linearmotor umfassend einen Stator. Der Stator umfasst ein hohles Joch, das aus zwei Seitenwänden, einer Decke und einem Boden zusammen gesetzt ist. An den beiden Seitenwänden sind außen mehrere Spulen gebildet. Auf den Spulen ist eine Leiterplatte aufgesetzt. Um den Stator herum ist ein Gleiter als bewegliches Element gebildet, wobei der Gleiter an den Spulen gegenüberliegenden Wänden Permanentmagnete aufweist.

Die Offenlegungsschrift US 2008/0036305 A1 zeigt einen Linearmotor umfassend mehrere Kern-/Wicklungseinheiten, die jeweils einen Kern aus Stahl sowie eine um den Kern gewickelte Spule umfasst. Hierbei sind die Kern/Wicklungseinheiten an Halteelementen befestigt, wobei die Halteelemente selbst an einem Rahmen befestigt sind.

Die US 5,701,042 A zeigt ein lineares Transportsystem. Das System umfasst einen Schlitten, der ein Gleitelement an seiner Unterseite aufweist. Das Gleitelement wird entlang einer Schiene geführt.

Die EP 1 758 231 A1 zeigt einen Linearmotor. Der Linearmotor umfasst einen Schlitten, der sich entlang eines Stators bewegen kann. Der Stator umfasst Spulen, die zwischen zwei Spulenbefestigungsrahmen vorgesehen sind.

Die JP 2010 074977 A zeigt einen Linearmotor umfassend einen Schlitten. Der Schlitten weist eine U-förmige Halterung auf, die eine Leiterplatte aufnimmt.

Die US6876107 B2 zeigt eine Anordnung, bei der ein Magnetfelderzeuger in Haltemodulen an einer Aufnahmeeinrichtung befestigt sind. Die Aufnahmeeinrichtung bildet gleichzeitig eine Führung zum Führen eines Fahrzeugs.

Die JP 06165475 A zeigt eine Aufnahmeeinrichtung an einem Statormodul, an der eine Führung zum Führen eines Fahrzeugs befestigt ist.

Die US 2008/0036305 A1 offenbart eine Statorvorrichtung mit den Merkmalen des Obergriffs des Anspruchs 1.

Die der Erfindung zugrunde liegende Aufgabe kann daher darin gesehen werden, eine verbesserte Statorvorrichtung für einen Linearmotor anzugeben, die einen einfacheren Aufbau aufweist, wobei insbesondere eine elektrische Kontaktierung eines Magnetfelderzeugers zum Bilden eines Magnetfeldes einfach durchgeführt werden kann und wobei es insbesondere ermöglicht ist, je nach Bedarf eine optimale Führung verwenden zu können.

Die der Erfindung zugrunde liegende Aufgabe kann auch darin gesehen werden, ein entsprechendes lineares Transportsystem zu schaffen.

Diese Aufgaben werden durch eine erfindungsgemässe Statorvorrichtung gemäss Anspruch 1 und ein erfindungsgemässes lineares Transportsystem gemäss Anspruch 14 gelöst. Vorteilhafte Ausgestaltungen der Erfindung sind in den abhängigen Ansprüchen definiert. Nach einem Aspekt wird eine Statorvorrichtung für einen Linearmotor bereitgestellt. Die Statorvorrichtung umfasst einen elektrisch bestrombaren Magnetfelderzeuger zum Bilden eines Magnetfeldes. Des Weiteren ist ein Haltemodul zum Halten des Magnetfelderzeugers vorgesehen. Hierbei ist der Magnetfelderzeuger an dem Haltemodul befestigt. Die Statorvorrichtung umfasst ferner eine von dem Haltemodul getrennt gebildete Aufnahmeeinrichtung zur Befestigung einer Führung zum Führen eines Fahrzeugs. Das Haltemodul ist an der Aufnahmeeinrichtung befestigt.

Gemäß einem weiteren Aspekt wird ein lineares Transportsystem bereitgestellt. Das lineare Transportsystem umfasst die vorgenannte Statorvorrichtung und einen Träger für ein Fahrzeug, wobei der Träger ein Reaktionsteil umfasst, welches ausgebildet ist, mit dem mittels des Magnetfelderzeugers der Statorvorrichtung gebildeten Magnetfeld wechselzuwirken, so dass insbesondere in vorteilhafter Weise eine Vorschubkraft gebildet wird, die den Träger verlagert bzw. bewegt. Vorzugsweise ist das Reaktionsteil als ein weiterer Magnetfelderzeuger zum Bilden eines Magnetfeldes gebildet. Insbesondere können mehrere Träger gebildet sein, welche vorzugsweise gleich oder unterschiedlich gebildet sind.

Das Vorsehen einer von dem Haltemodul getrennt gebildeten Aufnahmeeinrichtung zur Befestigung einer Führung zum Führen eines Fahrzeugs weist insbesondere den Vorteil auf, dass beliebige Führungen für ein bestimmtes Haltemodul verwendbar sind. Das heißt also insbesondere, dass je nach Anwendungsfall die hierfür optimale Führung verwendet werden kann. Die Führungen können also ausgetauscht werden, so dass beispielsweise unterschiedliche geometrische Randbedingungen berücksichtigt werden können. Insbesondere können so in vorteilhafter Weise unterschiedliche Fahrzeuge verwendet werden, da diese in der Regel eine genau auf sich abgestimmte Führung benötigen. Ferner ist es in vorteilhafter Weise möglich, eine Führung für mehrere Statorvorrichtungen zu verwenden. In einem solchen Fall können diese mehrere Statorvorrichtungen hintereinander angeordnet werden, wobei die eine Führung dann über die mehreren Statorvorrichtungen hinweg angeordnet und an den jeweiligen Aufnahmeeinrichtungen befestigt wird. In einer solchen Ausführungsform entfallen in vorteilhafter Weise Stoßstellen in der Führung zwischen den einzelnen Statorvorrichtungen, so dass sich in vorteilhafter Weise die Laufeigenschaften eines Fahrzeugs, welches über die mehreren Statorvorrichtungen fährt, verbessern.

Ferner ist es in vorteilhafter Weise ermöglicht, dass sich die Führung unabhängig vom Haltemodul montieren lässt, so dass voneinander getrennte Arbeitsschritte möglich sind. Dies bewirkt in vorteilhafter Weise insbesondere eine einfachere Montage. Ferner kann bei einer Beschädigung oder einem Verschleiß der Führung diese einfach ausgetauscht werden, ohne dass die Statorvorrichtung als solche ganz auszutauschen oder zu demontieren wäre. Sowohl Material als auch Kosten können somit in vorteilhafter Weise eingespart werden.

Nach einer weiteren Ausführungsform der Erfindung kann vorgesehen sein, dass die Aufnahmeeinrichtung zumindest eine Bohrung zur Aufnahme eines die Führung an der Aufnahmeeinrichtung befestigende Befestigungsmittels aufweist. Dies ermöglicht insbesondere eine einfache und vorzugsweise lösbare Befestigung. Es können insbesondere mehrere Bohrungen vorgesehen sein, die gleich oder unterschiedlich gebildet sein können. Die Bohrung kann beispielsweise mit einem Gewinde versehen sein, so dass in vorteilhafter Weise als Befestigungsmittel eine Schraube vorgesehen sein kann. Vorzugsweise können Passstifte als Befestigungsmittel vorgesehen sein. Als Befestigungsmittel können beispielsweise Nieten vorgesehen sein. In einer alternativen Ausführungsform kann vorgesehen sein, dass die Aufnahmeeinrichtung eine Klebschicht umfasst, so dass in vorteilhafter Weise die Führung auf das Haltemodul geklebt werden kann. Vorzugsweise kann vorgesehen sein, dass die Führung an der Aufnahmeeinrichtung mittels Schweißen oder Löten befestigt wird.

In einer anderen Ausführungsform der Erfindung kann vorgesehen sein, dass die Aufnahmeeinrichtung als ein Profilelement gebildet ist. Ein Profilelement kann einfach hergestellt werden, so dass ein entsprechender Aufbau besonders kostengünstig und einen Montageaufwand betreffend einfach hergestellt werden kann. Ein Profilelement im Sinne der vorliegenden Erfindung weist insbesondere über seine gesamte Länge einen identischen Querschnitt auf. Ein Profilelement im Sinne der vorliegenden Erfindung kann beispielsweise aus dem Werkstoff Stahl gebildet sein. Ein solches Profilelement kann dann beispielsweise als ein Profilstahl bezeichnet werden. Das Profilelement kann in einer alternativen Ausführungsform beispielsweise aus Kunststoff, insbesondere einem faserverstärkten Kunststoff, gebildet sein. Vorzugsweise kann das Profilelement aus Aluminium gebildet sein. Das Profilelement kann beispielsweise ein U-Profilelement, ein T-Profilelement, ein Z-Profilelement, ein L-Profilelement oder ein I-Profilelement sein. Das heißt also insbesondere, dass die vorgenannten Profilelemente einen Querschnitt aufweisen, welcher die Form eines "U", eines "T", eine "Z", eines "L" oder eines "I" aufweist. Vorzugsweise kann das Profilelement einen rechteckigen, insbesondere einen quadratischen, Querschnitt aufweisen. Das Profilelement kann aus einem Vollmaterial gebildet sein. Alternativ kann das Profilelement aus einen Hohlmaterial gebildet sein. Die aufgeführten Profilbeispiele sind insbesondere beispielhaft und nicht einschränkend zu verstehen. Das Haltemodul weist eine erste und eine zweite Halteeinrichtung auf, an welchen der Magnetfelderzeuger befestigt ist, wobei der Magnetfelderzeuger zwischen den beiden Halteeinrichtungen angeordnet ist und wobei die beiden Halteeinrichtungen an gegenüberliegenden Seiten der Aufnahmeeinrichtung befestigt sind. In einer solchen Ausführungsform bewirkt die Aufnahmeeinrichtung noch zusätzlich in vorteilhafter Weise eine mechanische Stabilisierung. Das heißt also insbesondere, dass die Aufnahmeeinrichtung äußere Kräfte aufnimmt, welche beispielsweise auf das Haltemodul wirken. Ein solcher Aufbau ist in vorteilhafter Weise mechanisch besonders stabil und kompakt. Die beiden Halteeinrichtungen können gleich oder unterschiedlich gebildet sein. Vorzugsweise ist die Aufnahmeeinrichtung oberhalb des Magnetfelderzeugers angeordnet.

In einer anderen Ausführungsform der Erfindung kann vorgesehen sein, dass der Magnetfelderzeuger an der ersten und/oder der zweiten Halteeinrichtung angeklebt ist. Somit kann in vorteilhafter Weise eine besonders zuverlässige und dauerhaft haltende Befestigung des Magnetfelderzeugers an der Halteeinrichtung bzw. den Halteeinrichtungen bewirkt werden.

Nach einer Ausführungsform der Erfindung kann vorgesehen sein, dass der Magnetfelderzeuger mittels eines Lötpads oder mehrerer Lötpads mit auf und/oder in der ersten und/oder der zweiten Halteeinrichtung, insbesondere der Leiterplatte, befindlichen elektrischen Leiterbahnen elektrisch verbunden beziehungsweise kontaktiert ist. Das heißt also insbesondere, dass eine elektrische Kontaktierung des Magnetfelderzeugers mittels des Lötpads respektive mittels der Lötpads bewirkt wird.

Nach einer weiteren Ausführungsform der Erfindung kann vorgesehen sein, dass der Magnetfelderzeuger mittels eines Steckers und/oder einer Verschraubung und/oder einer Klemmung und/oder einer Lötung mit auf und/oder in der ersten und/oder der zweiten Halteeinrichtung, vorzugsweise der Leiterplatte, befindlichen elektrischen Leiterbahnen elektrisch verbunden beziehungsweise kontaktiert ist. Das heißt also insbesondere, dass eine elektrische Kontaktierung zwischen dem Magnetfelderzeuger und der ersten und/oder der zweiten Halteeinrichtung, beispielsweise der Leiterplatte, mittels eines Steckers und/oder einer Verschraubung und/oder einer Klemmung und/oder einer Lötung bewirkt werden kann. Vorzugsweise können auch mehrere Stecker, Verschraubungen, Klemmungen und/oder Lötungen vorgesehen sein.

Gemäß einer weiteren Ausführungsform kann vorgesehen sein, dass zumindest eine der beiden Halteeinrichtungen, vorzugsweise beide Halteeinrichtungen, zumindest teilweise aus einem elektrisch und/oder magnetisch nicht-leitenden Material gebildet ist.

Das Vorsehen eines Materials aus einem elektrisch und/oder magnetisch nicht-leitenden Material für die Halteeinrichtung bzw. die Halteeinrichtungen bewirkt in vorteilhafter Weise, dass die Halteeinrichtung einen magnetischen Kreis nicht oder zumindest nicht störend beeinflusst. Die Halteeinrichtung bewirkt also insbesondere eine hohe mechanische Festigkeit bezüglich einer Halterung des Magnetfelderzeugers. Ferner bewirkt das elektrisch bzw. magnetisch nicht-leitende Material in vorteilhafter Weise eine Reduktion von Wirbelstromverlusten.

Als elektrisch bzw. magnetisch nicht-leitendes Material kann allgemein vorzugsweise ein Harz oder eine Keramik vorgesehen sein. Insbesondere kann allgemein vorgesehen sein, dass die Halteeinrichtung mehrere unterschiedliche elektrisch und/oder magnetisch nicht-leitende Materialien umfasst bzw. aus solchen zumindest teilweise gebildet ist. Das Material kann beispielsweise ein Kunststoff sein, insbesondere ein faserverstärkter Kunststoff. Erfindungsgemäss ist vorgesehen, dass die erste und/oder die zweite Halteeinrichtung als eine Leiterplatte für eine elektrische Kontaktierung des Magnetfelderzeugers gebildet sind. Somit kann in vorteilhafter Weise eine einfache elektrische Kontaktierung durch beispielsweise ein Anlöten des Magnetfelderzeugers auf der Leiterplatte bei gleichzeitiger hoher mechanischer Festigkeit bewirkt werden. Es wird also eine Leiterplatte vorgesehen, welche in vorteilhafter Weise sowohl den Magnetfelderzeuger elektrisch kontaktieren als auch den Magnetfelderzeuger halten kann. Die Leiterplatte übernimmt somit in vorteilhafter Weise eine Doppelfunktion, als dass diese den Magnetfelderzeuger sowohl hält als auch elektrisch kontaktiert.

Somit kann insbesondere in vorteilhafter Weise Material eingespart werden, insofern anstelle von zwei getrennten Bauteilen, welche lediglich jeweils eine der vorgenannten Funktionen, also eine Halterung und eine elektrische Kontaktierung, ermöglichen, nun ein Bauteil, die Leiterplatte, aufweisend beide Funktionalitäten verwendet wird. Auch ist eine Montage der Statorvorrichtung erheblich vereinfacht. Der Magnetfelderzeuger wird an der Leiterplatte befestigt, wobei dann eine elektrische Verbindung zwischen dem Magnetfelderzeuger und der Leiterplatte mittels elektrischer Kontaktierung des Magnetfelderzeugers gebildet werden kann. Dadurch, dass der Magnetfelderzeuger an der Leiterplatte befestigt ist, kann eine entsprechende elektrische Verbindung im Vergleich zum Stand der Technik relativ kurz ausgeführt werden. Auch hier können somit in vorteilhafter Weise Material und Montagezeit eingespart werden. Ferner weist eine solche Ausführungsform auch ein geringeres Bauvolumen auf als bekannte Systeme.

Eine Leiterplatte im Sinne der vorliegenden Erfindung ist insbesondere ein Träger für elektronische Bauteile bzw. Komponenten. Eine Leiterplatte im Sinne der vorliegenden Erfindung ist insbesondere ausgebildet, elektronische Bauteile mechanisch zu befestigen und elektrisch zu verbinden beziehungsweise zu kontaktieren. Eine Leiterplatte im Sinne der vorliegenden Erfindung kann insbesondere als eine Leiterkarte, eine Platine oder als eine gedruckte Schaltung gebildet sein. Im Englischen wird der Begriff "printed circuit board" für den deutschen Begriff Leiterplatte verwendet. Eine Leiterplatte im Sinne der vorliegenden Erfindung umfasst insbesondere ein elektrisch isolierendes Material mit elektrisch leitenden Verbindungen, welche vorzugsweise an dem elektrisch isolierenden Material angeordnet sein, vorzugsweise haften, können. Diese elektrisch leitenden Verbindungen können vorzugsweise auch als Leiterbahnen bezeichnet werden. Vorzugsweise umfasst die Leiterplatte als elektrisch isolierendes Material einen Kunststoff, insbesondere einen faserverstärkten Kunststoff. Durch das Vorsehen eines faserverstärkten Kunststoffes wird in vorteilhafter Weise in zumindest einer Vorzugsrichtung, insbesondere in mehreren Vorzugsrichtungen, eine besonders hohe mechanische Stabilität der Leiterplatte bewirkt. Hier kann eine weitere mechanische Stabilität insbesondere mittels eines Vergusses des Magnetfelderzeugers bewirkt werden. Somit ist die Leiterplatte insbesondere in der Lage, auch verhältnismäßig große und schwere Magnetfelderzeuger zu halten. Vorzugsweise kann vorgesehen sein, dass die Leiterbahnen, also die elektrisch leitenden Verbindungen, in dem elektrisch isolierenden Material eingebettet sind. Somit sind die elektrischen Leiterbahnen gegen äußere Einflüsse in vorteilhafter Weise geschützt. Insbesondere ist so auch in vorteilhafter Weise eine elektrische Kurzschlussgefahr verringert, wenn nicht gar vermieden, insofern die elektrischen Leiterbahnen mittels des elektrisch isolierenden Materials zum einen voneinander und zum anderen auch von weiteren elektrisch leitenden Bauteilen isoliert sind. Das Vorsehen einer Leiterplatte umfassend einen Kunststoff, insbesondere einen faserverstärkten Kunststoff, weist ferner insbesondere den Vorteil auf, dass eine solche Leiterplatte einen magnetischen Kreis, also ein Magnetfeld, nicht beeinflusst.

Gemäß einer weiteren Ausführungsform der Erfindung kann vorgesehen sein, dass die Aufnahmeeinrichtung eine den Magnetfelderzeuger zumindest teilweise umgebende Vergussmasse umfasst. Das heißt also insbesondere, dass ein Verguss des Magnetfelderzeugers gleichzeitig als Aufnahmeeinrichtung verwendet werden kann. Ein solcher Verguss schützt insbesondere den Magnetfelderzeuger vor äußeren Kräften und bewirkt somit eine Doppelfunktion: eine Schutzfunktion und eine Aufnahmefunktion. Somit ist in vorteilhafter Weise ein besonders kompakter Aufbau ermöglicht, da hier ein Bauteil, der Verguss, wie zwei getrennte Bauteile wirkt. Es findet also eine besonders effiziente Nutzung des Vergusses bzw. der Vergussmasse statt. Vorzugsweise kann vorgesehen sein, dass die Vergussmasse ein Epoxidharz umfasst. Beispielsweise kann vorgesehen sein, dass die zumindest eine Bohrung in der Vergussmasse vorgesehen ist. Vorzugsweise kann der Verguss zur Befestigung des Magnetfelderzeugers an dem Haltemodul, insbesondere an den Halteeinrichtungen, verwendet werden. Das heißt also insbesondere, dass der Magnetfelderzeuger mittels Vergießen an dem Haltemodul befestigt wird bzw. ist.

In einer anderen Ausführungsform der Erfindung kann vorgesehen sein, dass das Haltemodul an einem Trägermodul zum Tragen des Haltemoduls befestigt ist. Somit ist in vorteilhafter Weise ein modularer Aufbau insofern ermöglicht, da unterschiedliche Trägermodule je nach Anwendungsfall und räumlichen Parametern ermöglicht sind. Vorzugsweise kann das Trägermodul ein Profilelement sein. Die im Zusammenhang mit dem Profilelement als Aufnahmeeinrichtung gemachten Ausführungen gelten analog für ein Profilelement als Trägermodul. Insbesondere kann das Trägermodul Aufnahmen für Befestigungsmittel aufweisen, mittels welchen eine Befestigung des Trägermoduls an einer Trägerplatte ermöglicht ist. Somit ist in vorteilhafter Weise eine räumliche Befestigung des Trägermoduls ermöglicht. Die Aufnahmen des Trägermoduls können analog zu den Aufnahmen der Aufnahmeeinrichtung gebildet sein. Entsprechende in Bezug zu den Befestigungsmitteln gemachte Ausführungen gelten analog für die Befestigungsmittel zur Befestigung des Trägermoduls an der Trägerplatte.

Nach noch einer anderen Ausführungsform der Erfindung kann vorgesehen sein, dass das Trägermodul einen Einbauraum für eine elektronische Komponente umfasst. Vorzugsweise können mehrere Einbauräume vorgesehen sein. Die Einbauräume können vorzugsweise gleich oder alternativ insbesondere unterschiedlich gebildet sein. Insbesondere können mehrere elektronische Komponenten vorgesehen sein, welche gleich oder unterschiedlich gebildet sind. Durch das Vorsehen eines Einbauraums wird in vorteilhafter Weise eine effiziente Nutzung des Trägermoduls ermöglicht, da die Statorvorrichtung nicht noch weiter vergrößert wird aufgrund des Vorsehens einer oder mehrerer elektronischer Komponenten. Die Komponenten liegen vorteilhafterweise geschützt in dem Einbauraum. Ferner sind Nutzer vor den elektronischen Komponenten geschützt. Elektronische Komponenten im Sinne der vorliegenden Erfindung können beispielsweise eine Ansteuerelektronik, eine Wegmesssystemelektronik, Platinen oder Leiterplatten umfassen.

Nach einer anderen Ausführungsform der Erfindung kann vorgesehen sein, dass in dem Einbauraum zumindest eine Schiene oder zumindest eine Nut ausgebildet ist. Mittels der Schiene oder Nut kann eine in dem Einbauraum befindliche elektrische Komponente, beispielsweise eine Leiterplatte, längs der Schiene oder Nut verschoben werden. Das Vorsehen einer Schiene oder Nut bietet insbesondere den Vorteil, dass die elektrische Komponente gegen Verkippen oder Verrutschen geschützt ist. Vorzugweise können mehrere, gleich oder unterschiedlich ausgebildete Schienen oder Nuten vorgesehen sein, um eine Mehrzahl an elektrischen Komponenten verschieben zu können.

Das Verschieben einer in dem Einbauraum befindlichen elektrischen Komponente kann in einer anderen Ausführungsform der Erfindung mittels eines Verschiebemittels realisiert werden, wozu in dem Einbauraum, insbesondere in einer Wandung des Einbauraums ein Schlitz zur Halterung und Führung des Verschiebemittels ausgebildet ist. Mittels des Verschiebemittels ist es beispielsweise möglich, eine elektrische Komponente, beispielsweise eine Leiterplatte, vom Einbauraum einer Statorvorrichtung in den Einbauraum einer direkt neben der Statorvorrichtung angeordneten zweiten Statorvorrichtung zu verschieben. In dem Einbauraum der zweiten Statorvorrichtung kann dann beispielsweise mittels eines Steckers die eingeschobene elektrische Komponente mit anderen elektrischen Komponenten der zweiten Statorvorrichtung elektrisch verbunden werden. Der Stecker weist vorteilhafterweise insbesondere Federkontakte auf, so dass neben einer zuverlässigen elektrischen Kontaktierung eine mechanische Fixierung der eingeschobenen elektrischen Komponente realisierbar ist.

Bei einer anderen Ausführungsform der Erfindung kann vorgesehen sein, dass der Einbauraum eine Art Tunnel bildet, in den elektrische Komponenten einschiebbar sind. Hierbei ist es möglich, dass eine Mehrzahl von nebeneinander angeordneten Statorvorrichtungen einen Gesamttunnel bildet, in den ein- oder mehrteilig ausgebildete elektrische Komponenten, insbesondere Leiterplatten, einschiebbar sind. In den Einbauräumen bzw. Tunneln der einzelnen Statorvorrichtungen sind dann elektrische Verbindungsmittel zur elektrischen Kontaktierung zwischen den elektrischen Komponenten der Statorvorrichtungen und den eingeschobenen elektrischen Komponenten angeordnet.

Die elektrische Kontaktierung von nebeneinander angeordneten Statorvorrichtungen mittels einschiebbarer bzw. verschiebbarer elektrischer Komponenten, insbesondere Leiterplatten, bietet insbesondere den Vorteil, dass nicht jede Statorvorrichtung mittels eines Kabels oder dergleichen mit einer Spannungsversorgung und/oder übergeordneten Steuerung verbunden werden muss, sondern es reicht aus, wenn eine Statorvorrichtung eine entsprechende Verbindungsmöglichkeit aufweist. Die weiteren angeschlossenen Statorvorrichtungen werden untereinander mittels der einschiebbaren bzw. verschiebbaren elektrischen Komponenten kontaktiert. Im Austauschfall einzelner Statorvorrichtungen aus einem Statorverbund sind dann lediglich die eingeschobenen elektrischen Komponenten zu den benachbarten Statorvorrichtungen zurückzuschieben. Danach kann die Statorvorrichtung aus dem Verbund gelöst werden. Nach Einsetzen einer neuen Statorvorrichtung brauchen dann nur die elektrischen Komponenten in die benachbarten Statorvorrichtungen verschoben werden und die elektrische Kontaktierung des Gesamtsystems ist wieder hergestellt.

Nach noch einer weiteren Ausführungsform der Erfindung kann vorgesehen sein, dass ein Parameterspeicher für Ansteuerparameter des Magnetfelderzeugers vorgesehen ist. Somit können insbesondere individuelle Ansteuerparameter, die materialbedingte Ungenauigkeiten oder Fertigungsstreuungen berücksichtigen, abgespeichert und später von einer übergeordneten Steuerung ausgelesen werden.

Ansteuerparameter im Sinne der vorliegenden Erfindung bezeichnen insbesondere Parameter, mittels welchen der Magnetfelderzeuger angesteuert werden kann. Ansteuerparameter im Sinne der vorliegenden Erfindung können insbesondere einen definierten Stromverlauf, insbesondere einen örtlichen Stromverlauf, bzw. einen örtlichen Zusammenhang zwischen Strom und Vorschubkraft bzw. Kraftkonstante des Motors umfassen. Das heißt also insbesondere, dass mittels der Ansteuerparameter eine Ansteuerung des Magnetfelderzeugers in vorteilhafter Weise bewirkt werden kann. Diese Ansteuerparameter können vorzugsweise im Betrieb ausgelesen werden, beispielsweise mittels einer Elektronik, insbesondere der Leistungselektronik, oder einer übergeordneten Steuerung, um den Magnetfelderzeuger entsprechend zu betreiben. Vorzugsweise ist der Parameterspeicher auf oder in der Halteeinrichtung, insbesondere auf oder in der ersten oder zweiten Halteeinrichtung, angeordnet. Insbesondere können auch mehrere Parameterspeicher vorgesehen sein, so dass in vorteilhafter Weise eine Ausfallredundanz geschaffen ist.

Nach noch einer weiteren Ausführungsform der Erfindung kann vorgesehen sein, dass ein Sensor zum Messen eines Betriebsparameters des Magnetfelderzeugers vorgesehen ist. Somit ist in vorteilhafter Weise eine Überwachung von Betriebsparametern ermöglicht. Ein Betriebsparameter kann beispielsweise ein Ist-Strom des Magnetfelderzeugers und/oder eine Temperatur und/oder eine Betriebsspannung des Magnetfelderzeugers umfassen. Die gemessenen Werte können vorzugsweise an eine übergeordnete Steuerung übermittelt werden. Dies kann insbesondere drahtlos und/oder drahtgebunden durchgeführt werden, wobei bei einer drahtgebundenen Übermittlung der gemessenen Werte hierfür die elektronischen Komponenten verwendet werden können. In einem linearen Transportsystem umfassend mehrere hintereinander angeordnete Statorvorrichtungen, welche insofern einen Fahrweg/Fahrstrecke für ein Fahrzeug bilden, kann somit in vorteilhafter Weise eine Einzelüberwachung der einzelnen Statorvorrichtungen bewirkt werden. Vorzugsweise können mehrere Sensoren vorgesehen sein. Die Sensoren können insbesondere gleich oder alternativ vorzugsweise unterschiedlich gebildet sein. Ein Sensor, welcher einen Strom, insbesondere einen Ist-Strom misst, kann auch als ein Stromsensor bezeichnet werden. Ein Sensor, welcher eine Temperatur messen kann, kann beispielsweise als ein Temperatursensor bezeichnet werden.

Nach noch einer Ausführungsform der Erfindung kann vorgesehen sein, dass die Führung zum Führen eines Fahrzeugs vorgesehen ist, wobei die Führung oberhalb des Magnetfelderzeugers angeordnet und an der Aufnahmeeinrichtung befestigt ist. Somit wird in vorteilhafter Weise eine mechanische Entkopplung der Toleranzen zwischen dem Abstand des Reaktionsteils des Trägers und dem Magnetfelderzeuger einerseits und Lagermitteln des Trägers wie Rollen und der Führung andererseits bewirkt. Ferner wird ein Verschleiß der Führung und/oder der Lagermittel in vorteilhafter Weise minimiert. Die entsprechenden Toleranzen werden somit in vorteilhafter Weise voneinander entkoppelt, so dass mechanische Abmessungen, die beispielsweise zwischen den Laufrollen oder Gleitschienen eingehalten werden müssen, nur von der Führung als solche beeinflusst werden. Toleranzen im Haltemodul mit dem Magnetfelderzeuger oder von einem eventuellen weiteren Grundprofil haben in vorteilhafter Weise keinen Einfluss auf eine Vorspannkraft von mehreren hintereinander angeordneten Führungen gegeneinander.

Nach einer anderen Ausführungsform der Erfindung kann die Führung beispielsweise als eine Schiene gebildet sein, so dass in vorteilhafter Weise eine Führung eines rollengeführten Fahrzeugs bewirkt werden kann. Das Fahrzeug kann vorzugsweise zusätzlich oder anstelle fluid-, also insbesondere luft- bzw. gasgeführt, und/oder magnetgeführt sein.

In einer weiteren Ausführungsform der Erfindung kann vorgesehen sein, dass die Führung eine Querschnittsform mit zwei gegenüberliegenden Verengungen aufweist. Das heißt also insbesondere, dass in einer Querschnittsansicht die Führung an zwei gegenüberliegenden Seiten gegenüberliegend jeweils eine Verengung aufweist. Insofern weist die Führung eine Sanduhrform auf. Dadurch kann in vorteilhafter Weise eine Laufrolle in dieser Verengung anliegen und in dieser Verengung geführt werden. Vorzugsweise sind hier mehrere hintereinander angeordnete Laufrollen vorgesehen.

In einer anderen Ausführungsform der Erfindung kann vorgesehen sein, dass das Reaktionsteil ein weichmagnetisches Material umfasst. Vorzugsweise kann vorgesehen sein, dass das Reaktionsteil als eine Struktur aus einem weichmagnetischen Material gebildet ist oder eine solche Struktur umfasst. Ein weichmagnetisches Material bezeichnet insbesondere ein ferromagnetisches Material, was sich in einem Magnetfeld leicht magnetisieren lässt. Ein weichmagnetisches Material weist von sich aus kein permanentes oder nur ein sehr schwaches Magnetfeld auf, ist also kein Dauermagnet. Vorzugsweise weist das weichmagnetische Material eine Koerzitivfeldstärke von weniger als 1000 A/m auf. Ein weichmagnetisches Material kann beispielsweise Eisen und/oder Ferrite umfassen, welche insbesondere keramische bzw. gesinterte Werkstoffe sind. Ein weichmagnetisches Material kann beispielsweise eine Kobalt-Eisen-Legierung und/oder eine Nickel-Eisen-Legierung und/oder Ferrosilicium-Legierung (FeSi) und/oder Eisen-Aluminium-Silizium-Legierung (FeAlSi) umfassen. Eine Klassifizierung eines Materials als ein weichmagnetisches Material kann insbesondere mittels der Norm IEC 60404-1 durchgeführt werden. Das heißt also insbesondere, dass ein weichmagnetisches Material aus der mittels dieser Norm gebildeten Gruppe an Materialien gewählt sein kann.

Das Vorsehen eines solchen weichmagnetischen Materials bewirkt in vorteilhafter Weise, dass ein solcher Linearmotor umfassend die Statorvorrichtung und den Träger mit dem weichmagnetischen Material nach dem Reluktanzprinzip arbeitet. Ein solcher Linearmotor kann insofern insbesondere als ein Reluktanzmotor bezeichnet werden. Die Wirkungsweise ist insbesondere wie folgt.

Die Bewegung bzw. Verlagerung des Trägers kommt insbesondere dadurch zustande, dass das System umfassend das weichmagnetische Material und den Magnetfelderzeuger nach minimaler Reluktanz, auch magnetischer Widerstand genannt, strebt. Hierbei wird das weichmagnetische Material aufgrund des mittels des Magnetfelderzeugers gebildeten Magnetfelds magnetisiert und magnetisch von dem Magnetfelderzeuger angezogen, so dass sich der Träger verlagert. Insbesondere wenn mehrere Magnetfelderzeuger entlang einer Wegstrecke vorgesehen sind, werden die Magnetfelderzeuger zeitlich nacheinander bestromt, so dass sich entlang der Wegstrecke ein Magnetfeld aufbaut, was das weichmagnetische Material entsprechend magnetisch anzieht, wobei vorzugsweise vorgesehen sein kann, dass bei Stattfinden einer maximalen Annäherung, also eine Minimierung des Spaltes zwischen Magnetfelderzeuger und weichmagnetischem Material, auf dem beweglichen Teil, eine entsprechende Bestromung abgeschaltet wird. Das heißt also insbesondere, dass wenn sich der Spalt minimiert hat bzw. die magnetischen Feldlinien den kürzest möglichen Weg einnehmen und keine Vorschubkraft mehr erzeugen, der Strom für den entsprechenden Magnetfelderzeuger ausgeschaltet wird.

Das heißt also insbesondere, dass der erste Magnetfelderzeuger bestromt wird, um das Fahrzeug in Richtung des ersten Magnetfelderzeugers magnetisch anzuziehen. Wenn sich der Spalt minimiert hat bzw. die magnetischen Feldlinien den kürzest möglichen Weg einnehmen und keine Vorschubkraft mehr erzeugen, wird ein Strom für den ersten Magnetfelderzeuger ausgeschaltet. Es wird dann ein zweiter Magnetfelderzeuger, welcher dem ersten Magnetfelderzeuger nachfolgend angeordnet ist, bestromt, so dass der zweite Magnetfelderzeuger den Träger und damit insbesondere ein Fahrzeug in Richtung des zweiten Magnetfelderzeugers magnetisch anzieht. Wenn sich der Spalt minimiert hat bzw. die magnetischen Feldlinien den kürzest möglichen Weg einnehmen und keine Vorschubkraft mehr erzeugen, wird ein Strom für den zweiten Magnetfelderzeuger ausgeschaltet. Es wird dann ein dritter Magnetfelderzeuger, welcher dem zweiten Magnetfelderzeuger nachfolgend angeordnet ist, bestromt, so dass der dritte Magnetfelderzeuger den Träger und damit das Fahrzeug in Richtung des dritten Magnetfelderzeugers magnetisch anzieht. Die vorgenannten Schritte werden dann analog für den vierten und eventuell weiteren folgenden Magnetfelderzeuger durchgeführt.

In einer weiteren Ausführungsform der Erfindung kann vorgesehen sein, dass die Bestromung gemäß einer mathematischen Funktion erfolgt. Beispielsweise kann eine sinusförmige Funktion vorgesehen sein. Vorzugsweise kann die Bestromung mit verschiedenen zeitlichen und/oder verschiedenen örtlichen Verschiebungen in mehreren Magnetfelderzeugern gleichzeitig erfolgen, so dass hier nicht nur ein einfaches Ein- bzw. Ausschalten durchgeführt wird.

Ein Magnetfelderzeuger im Sinne der vorliegenden Erfindung ist insbesondere dafür ausgebildet, bei einer elektrischen Bestromung ein Magnetfeld zu bilden. Dies gilt analog für den weiteren Magnetfelderzeuger. Zwecks besserer Unterscheidung wird das vom weiteren Magnetfelderzeuger gebildete Magnetfeld als ein weiteres Magnetfeld bezeichnet. Das Magnetfeld und das weitere Magnetfeld wechselwirken insofern in vorteilhafter Weise miteinander, so dass über das Kreuzprodukt der Lorentzkraft eine Vorschubkraft auf den Träger beaufschlagt wird, so dass dieser eine Bewegung, insbesondere eine translatorische Bewegung, durchführt.

Gemäß einer Ausführungsform der Erfindung kann vorgesehen sein, dass an dem Träger ein Fahrzeug befestigt ist, so dass dieses entsprechend verlagert werden kann. Ein Fahrzeug im Sinne der vorliegenden Erfindung kann vorzugsweise auch als Schlitten oder Wagen bezeichnet werden. Im Englischen wird hierfür in der Regel der Begriff "mover" verwendet. Vorzugsweise kann der weitere Magnetfelderzeuger ein statisches Magnetfeld bilden. Das heißt also insbesondere, dass das weitere Magnetfeld ein statisches Magnetfeld ist. Vorzugsweise umfasst der weitere Magnetfelderzeuger einen oder mehrere Permanentmagnete. Insbesondere kann der weitere Magnetfelderzeuger als ein Permanentmagnet gebildet sein.

Gemäß einer weiteren Ausführungsform der Erfindung kann vorgesehen sein, dass der Träger mehrere weitere Magnetfelderzeuger aufweist. Vorzugsweise weist der Träger mehrere weitere Magnetfelderzeuger auf, welche jeweils gegenüberliegenden Enden des Magnetfelderzeugers gegenüberliegend angeordnet sind, so dass zwischen den weiteren Magnetfelderzeugern und dem Magnetfelderzeuger ein Spalt gebildet ist. Der Magnetfelderzeuger und die weiteren Magnetfelderzeuger in dem linearen Transportsystem sind somit beabstandet voneinander angeordnet. Vorzugsweise weist der Träger zwei Schenkel auf, wobei an Innenseiten der Schenkel die mehreren Magnetfelderzeuger gebildet sind. Zwischen den beiden Schenkeln und den Innenseiten der Schenkel gegenüberliegend kann vorzugsweise der Magnetfelderzeuger angeordnet sein. Vorzugsweise weist der Träger eine U-Form auf. Aufgrund der beiden Schenkel und der entsprechenden Anordnung ist eine Doppelspaltanordnung gebildet, insofern jeweils ein Spalt zwischen den Innenseiten der Schenkel und den entsprechenden Seiten des Magnetfelderzeugers gebildet ist.

Nach einer anderen Ausführungsform der Erfindung können mehrere Magnetfelderzeuger vorgesehen sein. Somit kann beispielsweise ein besonders großes resultierendes Magnetfeld gebildet werden. Weiterhin kann somit in vorteilhafter Weise auch ein räumlich ausgedehnter Bereich gebildet werden, in welchem ein Magnetfeld gebildet werden kann. Eine Wegstrecke kann somit in vorteilhafter Weise gebildet werden. Die mehreren Magnetfelderzeuger können vorzugsweise gleich oder unterschiedlich gebildet sein. Vorzugsweise können die mehreren Magnetfelderzeuger individuell bestromt werden, so dass insbesondere in vorteilhafter Weise jeweils unterschiedliche Magnetfelder gebildet werden können. Vorzugsweise werden die mehreren Magnetfelderzeuger zu einem mehrphasigen System geschaltet. Insbesondere können drei Phasen vorgesehen sein. Das heißt also insbesondere, dass jeder Magnetfelderzeuger der mehreren Magnetfelderzeuger einer Phase eines elektrischen Stroms zugeordnet wird.

Nach einer Ausführungsform der Erfindung kann vorgesehen sein, dass der Magnetfelderzeuger eine Spule umfasst. Vorzugsweise kann der Magnetfelderzeuger mehrere Spulen umfassen. Die Spulen können vorzugsweise gleich oder unterschiedlich gebildet sein. In einer weiteren möglichen beispielhaften Ausführungsform ist die Spule als eine Luftspule ausgebildet. Eine Luftspule weist keinen Kern auf, ist also kernlos gebildet. Der Kern besteht sozusagen aus Luft. In einer alternativen vorteilhaften Ausführungsform kann die Spule einen Kern umfassen. Das heißt also insbesondere, dass die Spule um einen Kern gewickelt ist. Bei dem Kern kann es sich beispielsweise um einen Eisenkern handeln. Der Kern kann beispielsweise aus einem Hohlmaterial oder einem Vollmaterial gebildet sein. Vorzugsweise kann der Kern ein weichmagnetisches Material umfassen. Insbesondere weist der Kern ein Material mit einer hohen Permeabilität und/oder mit einer geringen Restmagnetisierung auf. Vorzugsweise umfasst der Kern ein gesintertes Material. Der Kern kann insbesondere aus einem gesinterten Vollmaterial gebildet sein. Das Vorsehen eines Sintermaterials in einem Kern einer Spule weist insbesondere den Vorteil auf, dass in einem solchen Kern geringe bis gar keine Wirbelströme induziert werden können, wodurch in vorteilhafter Weise Wirbelstromverluste verringert, wenn nicht gar vermieden werden können. Außerdem sind durch geeignete Presswerkzeuge spezifische Geometrien eines Kerns aus einem Sintermaterial einfach und preisgünstig herstellbar.

Ein Linearmotor im Sinne der vorliegenden Erfindung entspricht insbesondere einer linearen Ausführung einer rotierenden Maschine aufweisend ein bestrombares Primärteil, das einem Stator eines Rotationsmotors vergleichbar ist, und ein Sekundärteil, das einem Rotor des Rotationsmotors entspricht. Im Lichte dieser Ausführungen kann der Magnetfelderzeuger als das Primärteil bezeichnet werden. Das Reaktionsteil, insbesondere der weitere Magnetfelderzeuger, kann als das Sekundärteil bezeichnet werden. Bei Linearmotoren kann insbesondere zwischen Asynchron- und Synchronmotoren unterschieden werden, wobei bei der asynchronen Bauweise das Sekundärteil mit Kurzschlussstäben bestückt ist, beim Synchronmotor dagegen aus Permanentmagneten besteht. Synchronmotoren weisen insbesondere den Vorteil auf, dass sie einen hohen Wirkungsgrad und hohe Dauervorschubkräfte aufweisen. Linearmotoren im Sinne der vorliegenden Erfindung können insbesondere zur Erzeugung von translatorischen Vorschubbewegungen verwendet werden. Im Lichte der vorgenannten Ausführungen bilden die Statorvorrichtung und das Reaktionsteil einen Linearmotor.

Im Lichte der vorherigen Ausführungen kann ein Kern einer Spule auch als ein Statorzahn bezeichnet werden. Die Kerne beziehungsweise Statorzähne, um welche die Spulen gewickelt sein können, können beispielsweise gleich oder unterschiedlich gebildet sein. Ein Statorzahn, um welchen eine Spule gewickelt ist, kann vorzugsweise als ein gewickelter Statorzahn bezeichnet werden. Ein Statorzahn, um welchen keine Spule gewickelt ist, kann vorzugsweise als ein ungewickelter Statorzahn bezeichnet werden. Erfindungsgemäss ist vorgesehen, dass die erste Halteeinrichtung eine erste Aussparung aufweist, in welcher ein erster Halteabschnitt des Magnetfelderzeugers gesteckt und fixiert ist. Das heißt also insbesondere, dass der erste Halteabschnitt des Magnetfelderzeugers in der ersten Aussparung steckend fixiert ist. Das heißt also insbesondere, dass der erste Halteabschnitt in die erste Aussparung gesteckt wird und anschließend oder dabei fixiert wird. Vorzugsweise können eine formschlüssige und/oder eine kraftschlüssige beziehungsweise reibschlüssige Fixierung vorgesehen sein. Das Fixieren kann vorzugsweise mittels Kleben und/oder Verschweißen und/oder Vergießen bewirkt werden. Erfindungsgemäss ist vorgesehen, dass der Magnetfelderzeuger einen Statorzahn und eine um den Statorzahn gewickelte Spule umfasst, wobei der erste Halteabschnitt an einem ersten Ende des Statorzahns gebildet ist. Das heißt also insbesondere, dass der Statorzahn an einem ersten Ende in die erste Aussparung der ersten Halteeinrichtung gesteckt ist und in dieser fixiert ist. Dies weist insbesondere den Vorteil auf, dass so eine besonders einfache Montage einer Spule mit einem Kern an der Halteeinrichtung, vorzugsweise der Leiterplatte, bewirkt werden kann. Vorzugsweise kann der ungewickelte Kern beziehungsweise der ungewickelte Statorzahn an seinem ersten Ende in die erste Aussparung gesteckt werden und in dieser fixiert werden. Anschließend kann beispielsweise vorgesehen sein, dass um den noch ungewickelten Kern beziehungsweise Statorzahn die Spule gewickelt wird. Somit ist ein Bilden einer Spule mittels Wickeln eines Spulendrahts um einen Kern in vorteilhafter Weise besonders vereinfacht. Insbesondere lässt sich so in vorteilhafter Weise ein Kupferfüllfaktor der Spule von über 60% erreichen. Vorzugsweise kann vorgesehen sein, dass eine vorgewickelte Spule auf den Statorzahn geschoben bzw. der Statorzahn in eine vorgewickelte Spule eingeschoben wird. Vorzugsweise wird ein Spulendraht direkt um den Statorzahn gewickelt, insbesondere wird hierfür ein Backlackdraht verwendet, wobei die direkte Wicklung in vorteilhafter Weise eine hohe mechanische Festigkeit zwischen Spule und Statorzahn bewirkt. Ferner wird ein erreichbarer Füllfaktor, insbesondere ein Kupferfüllfaktor noch weiter verbessert. Der so fertig umwickelte Statorzahn wird dann vorzugsweise in die Aussparung gesteckt. Erfindungsgemäss ist vorgesehen, dass die zweite Halteeinrichtung eine zweite Aussparung aufweist, in welcher ein zweiter Halteabschnitt des Magnetfelderzeugers gesteckt und fixiert ist. Die im Zusammenhang mit dem ersten Halteabschnitt des Magnetfelderzeugers gemachten Ausführungen gelten analog für den zweiten Halteabschnitt.

In einer weiteren Ausführungsform der Erfindung kann vorgesehen sein, dass der zweite Halteabschnitt an einem dem ersten Ende gegenüberliegenden zweiten Ende des Statorzahns gebildet ist. Das heißt also insbesondere, dass der Statorzahn beziehungsweise der Kern der Spule in jeweilige Aussparungen der beiden Halteeinrichtungen gesteckt ist und fixiert ist. Die entsprechenden Ausführungen bezüglich des ersten Endes des Statorzahns gelten analog für das zweite Ende des Statorzahns. Vorzugsweise wird die aus dem Statorzahn, der Spule und den Halteeinrichtungen gebildete Baueinheit mittels Vergießen miteinander fixiert, was zusätzlich zu einer erhöhten Festigkeit der Baueinheit führt.

Nach einer anderen Ausführungsform der Erfindung kann vorgesehen sein, dass mehrere voneinander beabstandete Magnetfelderzeuger gebildet sind und wobei zwischen zwei Magnetfelderzeugern jeweils ein ungewickelter Statorzahn vorgesehen ist, der an jeweils einem Ende von zwei gegenüberliegenden Enden des Statorzahns in eine jeweilige Aussparung der beiden Halteeinrichtungen gesteckt ist und fixiert ist. Durch das Vorsehen eines ungewickelten Statorzahns zwischen zwei Magnetfelderzeugern, insbesondere zwischen zwei gewickelten Statorzähnen, kann in vorteilhafter Weise insbesondere eine Reduzierung von Oberwellen in elektromagnetischen Kraftvektoren bewirkt werden.

Nach einer alternativen Ausführungsform der Erfindung kann vorgesehen sein, dass mehrere voneinander beabstandete Magnetfelderzeuger gebildet sind, wobei zwischen zwei Magnetfelderzeugern jeweils nur ein Spalt, insbesondere ein minimaler Spalt, ausgebildet ist. Durch die direkte Aneinanderreihung der Magnetfelderzeuger kann in vorteilhafter Weise die mittels der Magnetfelderzeuger erzeugte Antriebskraft erhöht werden.

Nach einer Ausführungsform der Erfindung weist die erste Halteeinrichtung, beispielsweise die Leiterplatte, mehrere erste Aussparungen auf. Aussparungen der ersten Halteeinrichtung können allgemein insbesondere auch als erste Aussparungen bezeichnet werden. Vorzugsweise kann vorgesehen sein, dass in jeder zweiten ersten Aussparung ein erster Halteabschnitt, insbesondere ein Statorzahn, gesteckt ist um welche jeweils eine Spule gewickelt ist. Zwischen zwei solchen gewickelten Statorzähnen kann vorzugsweise vorgesehen sein, dass ein ungewickelter Statorzahn in die entsprechend freie erste Aussparung gesteckt ist und fixiert ist. Durch das Vorsehen von mehreren Aussparungen kann insbesondere in vorteilhafter Weise eine Wegstrecke für das Fahrzeug gebildet werden, entlang derer es verfahren werden kann. Die ersten Aussparungen können linear verlaufend angeordnet sein. Das heißt also insbesondere, dass dadurch in vorteilhafter Weise eine lineare Wegstrecke gebildet ist. Die ersten Aussparungen können vorzugsweise eine Krümmung aufweisend verlaufend angeordnet sein. Das heißt also insbesondere, dass die ersten Aussparungen entlang eine Kurve mit einer Krümmung angeordnet sind. Vorzugsweise können die ersten Aussparungen entlang eines Kreisbogenabschnitts angeordnet sein. Insbesondere können die ersten Aussparungen entlang einer Klothoide angeordnet sein. Eine Klothoide ist insbesondere eine Kurve, bei der ein Radius am Anfang größer und später kleiner ist als ein mittlerer Radius. Das heißt also insbesondere, dass ein Krümmungsverlauf der Klothoide linear zunimmt. Damit wird in vorteilhafter Weise eine ruckfreie Fahrdynamik des Fahrzeugs bewirkt.

In einer weiteren Ausführungsform kann vorgesehen sein, dass die zweite Halteeinrichtung mehrere zweite Aussparungen aufweist. Aussparungen der zweiten Halteeinrichtung können allgemein auch als zweite Aussparungen bezeichnet werden. Vorzugsweise kann vorgesehen sein, dass in jede zweite Aussparung der zweiten Aussparungen ein zweiter Halteabschnitt eines Magnetfelderzeugers gesteckt und fixiert ist. Vorzugsweise kann in der dazwischenliegenden zweiten Aussparung ein ungewickelter Statorkern gesteckt und fixiert sein. Die entsprechenden Ausführungen in Bezug zu der ersten Halteeinrichtung mit den ersten Aussparungen gelten analog für die zweite Halteeinrichtung mit den zweiten Aussparungen.

Nach einer anderen Ausführungsform der Erfindung kann vorgesehen sein, dass die erste und/oder die zweite Halteeinrichtung, die als Leiterplatte ausgebildet ist bzw. sind, eine Leistungselektronik zur Ansteuerung des Magnetfelderzeugers aufweist bzw. aufweisen. Dadurch kann in vorteilhafter Weise ein entsprechender Bauraum besonders effizient ausgenutzt werden, insofern hier die Leistungselektronik direkt auf der Halteeinrichtung befestigt werden kann. Vorzugsweise kann vorgesehen sein, dass die Leistungselektronik in der Halteeinrichtung eingebettet ist, so dass diese in vorteilhafter Weise vor äußeren Einflüssen geschützt ist. Insbesondere weist das Vorsehen einer Leistungselektronik auf oder in der Halteeinrichtung den Vorteil auf, dass entsprechende Signalwege zwischen der Leistungselektronik und den Leiterbahnen beziehungsweise dem Magnetfelderzeuger kurz ausgeführt werden können, so dass entsprechende Signalverluste verringert sind. Ferner wird in vorteilhafter Weise ein Bauraum verkleinert.

Die Erfindung wird im Folgenden anhand von bevorzugten Ausführungsbeispielen unter Bezugnahme auf Figuren näher erläutert. Hierbei zeigen
- Fig. 1: eine Statorvorrichtung,
- Fig. 2: ein lineares Transportsystem,
- Fig. 3: Elemente einer weiteren Statorvorrichtung,
- Fig. 4: einen Statorzahn,
- Fig. 5: einen weiteren Statorzahn,
- Fig. 6: eine Leiterplatte,
- Fig. 7: eine andere Statorvorrichtung,
- Fig. 8: ein weiteres lineares Transportsystem,
- Fig. 9: das lineare Transportsystem gemäß Fig. 8 in einer vereinfachten Darstellung,
- Fig. 10: ein weiteres lineares Transportsystem,
- Fig. 11: eine Ansicht einer Abwandlung des linearen Transportsystems gemäß Fig. 8,
- Fig. 12: eine weitere Ansicht des linearen Transportsystems gemäß Fig. 11,
- Fig. 13: einen Träger
- Fig. 14: eine weitere Ansicht des linearen Transportsystems gemäß Fig. 11,
- Fig. 15: eine weitere Ansicht des linearen Transportsystems gemäß Fig. 14,
- Fig. 16: eine Ansicht eines bogenförmig ausgebildeten linearen Transportsystems und
- Fig. 17: eine weitere Ansicht des bogenförmig ausgebildeten linearen Transportsystems gemäß Fig. 16.

Im Folgenden können für gleiche Merkmale gleiche Bezugszeichen verwendet werden.

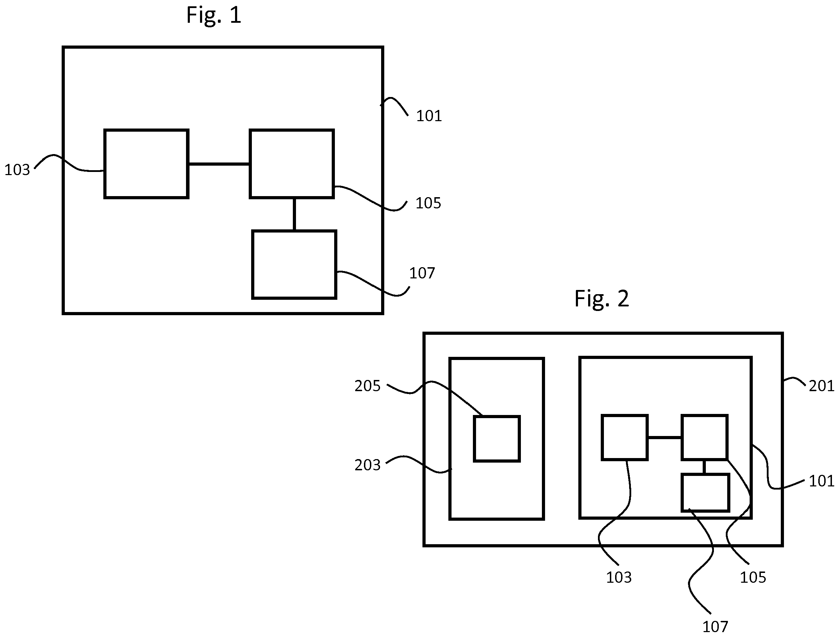

Fig. 1 zeigt eine Statorvorrichtung 101 für einen Linearmotor (nicht gezeigt).

Die Statorvorrichtung 101 umfasst einen Magnetfelderzeuger 103 zum Erzeugen eines Magnetfeldes. Der Magnetfelderzeuger 103 ist elektrisch bestrombar. Das heißt also insbesondere, dass sich bei einer elektrischen Bestromung des Magnetfelderzeugers 103 ein entsprechendes Magnetfeld bildet.

Die Statorvorrichtung 101 umfasst ferner ein Haltemodul 105, welches ausgebildet ist, den Magnetfelderzeuger 103 zu halten. Hierbei ist der Magnetfelderzeuger 103 an dem Haltemodul 105 befestigt.

Die Statorvorrichtung 101 umfasst ferner eine Aufnahmeeinrichtung 107, welche ausgebildet ist, eine Führung zum Führen eines Fahrzeugs zu befestigen bzw. aufzunehmen. Das heißt also insbesondere, dass an der Aufnahmeeinrichtung 107 die Führung befestigt werden kann. Hierbei ist die Aufnahmeeinrichtung 107 getrennt von dem Haltemodul 105 gebildet. Das Haltemodul 105 ist an der Aufnahmeeinrichtung 107 befestigt.

Fig. 2 zeigt ein lineares Transportsystem 201.

Das lineare Transportsystem 201 umfasst die Statorvorrichtung 101 gemäß Fig. 1. Das lineare Transportsystem 201 weist ferner einen Träger 203 auf, an welchem ein weiterer Magnetfelderzeuger 205 als Reaktionsteil angeordnet ist. Der weitere Magnetfelderzeuger 205 kann beispielsweise einen oder mehrere Permanentmagnete umfassen. Der weitere Magnetfelderzeuger 205 kann alternativ insbesondere ein weichmagnetisches Material umfassen. Der Träger 203 ist insbesondere dafür ausgebildet, an einem Fahrzeug, insbesondere an einem Wagen oder an einem Schlitten, befestigt zu werden. Mittels entsprechender elektromagnetischer Wechselwirkungen zwischen dem Magnetfeld des Magnetfelderzeugers 103 und des weiteren Magnetfelderzeugers 205 kann der Träger 203 und somit ein eventuell daran befestigtes Fahrzeug verlagert werden. In einer nicht gezeigten Ausführungsform kann vorgesehen sein, dass mehrere weitere Magnetfelderzeuger 205 vorgesehen sind.

In einer weiteren nicht gezeigten Ausführungsform kann vorgesehen sein, dass der weitere Magnetfelderzeuger 205 geschrägt angeordnet ist und/oder vorzugsweise eine Trapezform aufweist. Dies bewirkt in vorteilhafter Weise kleinere Kraftrippel im Vergleich zu einem weiteren Magnetfelderzeuger, welcher gerade angeordnet ist und eine Rechteckform aufweist, was weiterhin in vorteilhafter Weise zu einer gleichmäßigeren Bewegung beziehungsweise Verlagerung des Trägers 203 führt.

In einer anderen nicht gezeigten Ausführungsform kann vorgesehen sein, dass anstelle des weiteren Magnetfelderzeugers 205 das Reaktionsteil als eine Struktur aus einem weichmagnetischen Material gebildet ist oder eine solche Struktur umfasst.

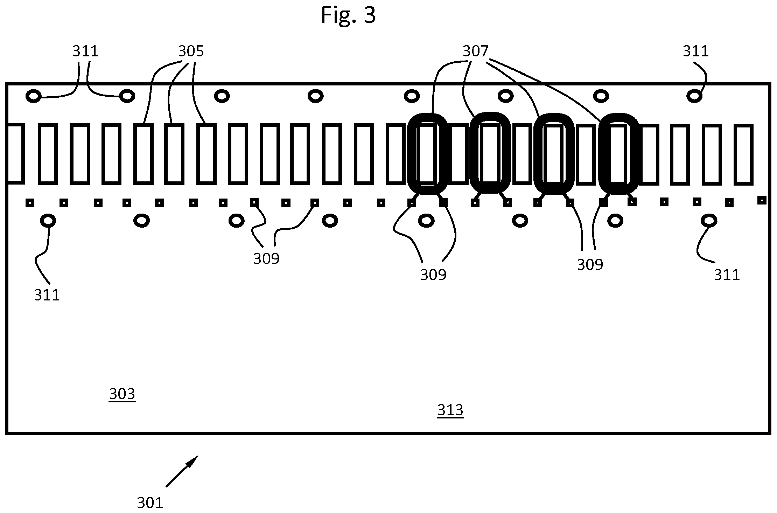

Fig. 3 zeigt Elemente einer weiteren Statorvorrichtung 301.

Die Statorvorrichtung 301 umfasst eine erste Leiterplatte 303 als erste Halteeinrichtung eines Haltemoduls. Die Leiterplatte 303 weist mehrere erste Aussparungen 305 auf. Die ersten Aussparungen 305 weisen eine Rechteckform auf. Die ersten Aussparungen 305 sind parallel nebeneinander angeordnet, wobei die entsprechenden Querseiten der ersten Aussparungen 305 jeweils auf einer hier nicht dargestellten Linie liegen. Somit ist in vorteilhafter Weise eine geradlinige Anordnung der ersten Aussparungen 305 bewirkt.

Ferner sind mehrere Spulen 307 gebildet, welche jeweils um einen hier nicht gezeigten Statorzahn gewickelt sind. Die Spulen 307 mit den Statorzähnen bilden insofern einen Magnetfelderzeuger. Hierbei wird ein Ende des Statorzahns in die erste Aussparung 305 gesteckt, so dass die ersten Aussparungen 305 die Spulen 307 halten. Hierbei weisen die Statorzähne vorzugsweise eine Rechteckform derart auf, dass diese insbesondere formschlüssig in die ersten Aussparungen 305 passen.

Ferner umfasst die Leiterplatte 303 mehrere Lötpads 309, welche entlang der ersten Aussparungen 305 angeordnet sind. Mittels der Lötpads 309 kann eine elektrische Kontaktierung der Leiterplatte 303 mit den Spulen 307 bewirkt werden. Das heißt also insbesondere, dass die Spulen 307, hier insbesondere entsprechende Spulenenden, mit der Leiterplatte 303 verlötet werden können.

Ferner umfasst die Leiterplatte 303 mehrere Löcher 311 für Durchgangsbohrungen, um so die Leiterplatte 303 an hier nicht gezeigten Profilelementen zu befestigen, insbesondere zu verschrauben. Die Löcher 311 sind in einem Bereich oberhalb und unterhalb der jeweiligen Querseiten der ersten Aussparung 305 gebildet.

Wie Fig. 3 zeigt, ist zwischen zwei Spulen 307 eine erste Aussparung 305 vorgesehen, in welcher kein Statorzahn mit einer Spule, also ein gewickelter Statorzahn, gesteckt ist.

Vorzugsweise kann vorgesehen sein, dass diese erste Aussparung 305 zwischen zwei Spulen 307 frei bleibt. In einer alternativen vorteilhaften Ausführungsform kann vorgesehen sein, dass in diese erste Aussparung 305 zwischen zwei Spulen 307 ein ungewickelter Statorzahn gesteckt wird. Dies bewirkt in vorteilhafter Weise eine besondere mechanische Stabilisierung, insbesondere in dem Fall, wenn auf die Leiterplatte 303 eine analog gebildete zweite Leiterplatte deckungsgleich gesetzt wird, so dass die Statorzähne ebenfalls in entsprechende Aussparungen der zweiten Leiterplatte gesteckt werden können. Die Aussparungen der zweiten Leiterplatte können insbesondere als zweite Aussparungen bezeichnet werden.

Eine solche zweite Leiterplatte bildet insofern in vorteilhafter Weise eine zweite Halteeinrichtung zum Halten der Spulen 307 des Haltemoduls, wobei die Spulen 307 zwischen den beiden Leiterplatten angeordnet sind.

Die zweite Leiterplatte kann vorzugsweise lötpadfrei sein. Das heißt also insbesondere, dass die zweite Leiterplatte keine Lötpads für eine elektrische Kontaktierung der Spulen 307 aufweist. Die elektrische Kontaktierung der Spulen 307 findet dann insofern lediglich über die erste Leiterplatte 303 statt.

In einem Bereich 313, welcher einem Leiterplattenbereich unterhalb den ersten Aussparungen 305 gegenüberliegt, ist nach einem Anordnen der zweiten Leiterplatte auf die erste Leiterplatte 303 mittels Verschraubung bzw. Befestigen der Leiterplatten in entsprechende hier nicht gezeigte Profilelemente ein Einbauraum, auch Bauraum bezeichnet, gebildet, in welchem beispielsweise elektronische Komponenten wie zum Beispiel eine Ansteuerungselektronik und/oder eine Leistungselektronik und/oder eine Erfassungssystemelektronik eines Positionserfassungssystems eingebaut werden können. Es werden hier vorzugsweise Signale gemessen, aus welchen insbesondere mittels einer übergeordneten Steuerung eine Position eines Fahrzeugs berechnet werden kann.

In einer nicht gezeigten Ausführungsform kann vorgesehen sein, dass ein solcher Einbauraum in dem Profilelement bzw. in den Profilelementen gebildet ist. In einer weiteren nicht gezeigten Ausführungsform kann vorgesehen sein, dass in dem Einbauraum eine Schiene für eine Führung der elektronischen Komponenten gebildet ist. In einer weiteren nicht gezeigten Ausführungsform kann vorgesehen sein, dass der Einbauraum als ein durch das Profilelement verlaufender Tunnel gebildet ist.

Eines der vorgenannten Profilelemente kann vorzugsweise gleichzeitig als eine Aufnahmeeinrichtung ausgebildet sein.

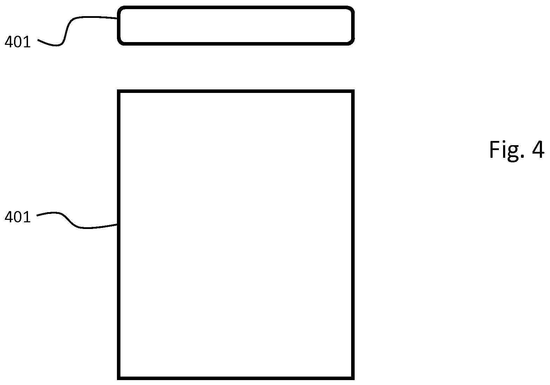

Fig. 4 zeigt einen Statorzahn 401. Die obere Zeichnung in Fig. 4 zeigt den Statorzahn 401 in einer Draufsicht. Unterhalb der Draufsicht ist eine Seitenansicht des Statorzahns 401 gezeigt.

Der Statorzahn 401 weist eine Rechteckform auf. In einer nicht gezeigten Ausführungsform kann vorgesehen sein, dass der Statorzahn 401 eine Quadratform aufweist. Der Statorzahn 401 gemäß Fig. 4 ist insbesondere ausgebildet, um in die ersten und zweiten Aussparungen der beiden Leiterplatten gemäß der Statorvorrichtung 301 in Fig. 3 eingesteckt zu werden.

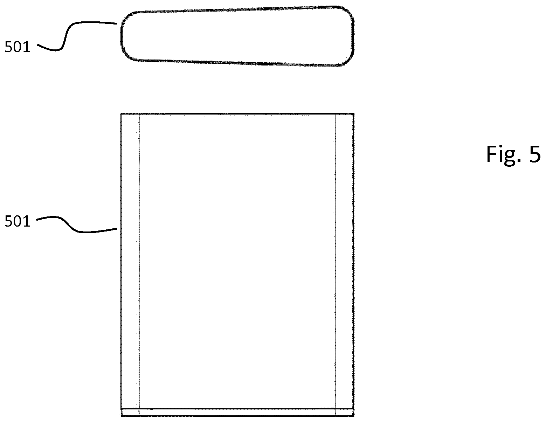

Fig. 5 zeigt einen weiteren Statorzahn 501. Die obere Zeichnung in Fig. 5 zeigt eine Draufsicht des Statorzahns 501. Die Zeichnung unterhalb der Draufsicht zeigt eine Seitenansicht des Statorzahns 501.

Wie Fig. 5 zeigt, weist der Statorzahn 501 eine Trapezform auf. Der Statorzahn 501 ist insbesondere dafür ausgebildet, in Aussparungen eingesetzt zu werden, welche eine entsprechende Form derart aufweisen, dass der Statorzahn 501 formschlüssig in diese Aussparung gesteckt werden kann. Mittels solcher Aussparungen kann dann beispielsweise in vorteilhafter Weise auch eine Kurve gebildet werden, insofern die mehreren Aussparungen entlang einer Kurve angeordnet sind.

Die beiden geometrischen Formen der Statorzähne 401 und 501 gemäß Fig. 4 und 5 sind nur als beispielhafte Ausführungsformen zu verstehen und nicht als einschränkend. Es sind insbesondere auch diverse andere geometrische Formen möglich.

Bei der in Fig. 4 und 5 beispielhaft gezeigten Ausführungsform kann der Statorzahn aus einem Sintermaterial gefertigt sein. Somit lässt sich ein solcher Statorzahn auch mit einem einfachen Sinterwerkzeug aus einem Sintermaterial fertigen.

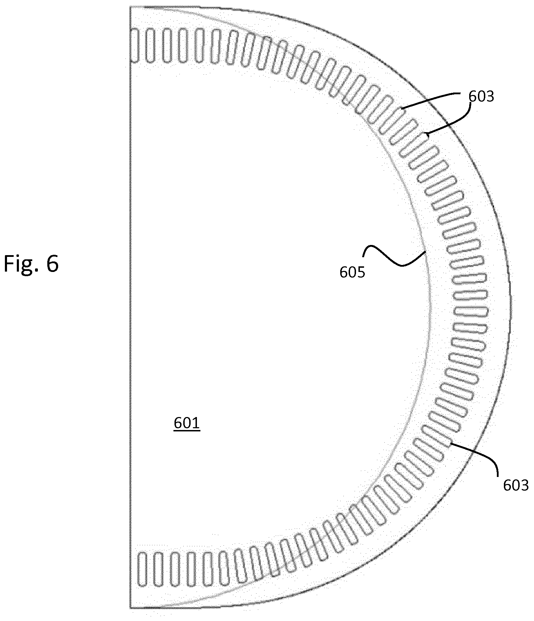

Fig. 6 zeigt eine als Leiterplatte 601 ausgebildete Halteeinrichtung mit entsprechend gebildeten Aussparungen, in welchen vorzugsweise die Statorzähne 501 gesteckt werden können. Die Aussparungen sind in Fig. 6 mit dem Bezugszeichen 603 gekennzeichnet. Sie sind hier entlang einer Kurve angeordnet, welche eine Klothoidenform aufweist. Eine Klothoide ist insbesondere eine Kurve, bei der ein Radius am Anfang größer und später kleiner ist als ein mittlerer Radius. Das heißt also insbesondere, dass ein Krümmungsverlauf der Klothoide linear zunimmt. Damit wird in vorteilhafter Weise eine ruckfreie Fahrdynamik eines Fahrzeugs bewirkt. Als Vergleich dazu ist hier eine Halbkreiskurve mit dem Bezugszeichen 605 eingezeichnet.

Die Leiterplatte 601 kann analog zu der Leiterplatte 303 vorzugsweise Lötpads und/oder Löcher für Durchgangsbohrungen aufweisen. Analog zu der Statorvorrichtung 301 gemäß Fig. 3 kann eine weitere Leiterplatte vorgesehen sein, welche analog zu der Leiterplatte 601 gebildet ist. Diese beiden Leiterplatten können dann vorzugsweise insofern übereinander deckungsgleich angeordnet werden und insbesondere an hier nicht gezeigten bogenförmigen Profilelementen verschraubt bzw. befestigt werden. Die Statorzähne 501 sind dann in den Aussparungen 603 gesteckt und entsprechend fixiert, wobei um zumindest einem Teil der Statorzähne 501 Spulen gewickelt sind. Eines der vorgenannten Profilelemente kann vorzugsweise eine Aufnahmeeinrichtung bilden.

In einer nicht gezeigten Ausführungsform kann vorgesehen sein, dass in ersten Aussparungen einer ersten Leiterplatte Statorzähne gesteckt und fixiert werden, wobei eine Fixierung insbesondere mittels eines Formschlusses bewirkt werden kann. Anschließend kann vorgesehen sein, dass um die Statorzähne die einzelnen Spulen gewickelt werden. Alternativ kann vorgesehen sein, dass im Vorfeld gewickelte Spulen auf fixierte Statorzähne aufgeschoben werden. Alternativ kann vorgesehen sein, dass einzelne Statorzähne im Vorfeld mit einer Spule umwickelt werden und dann die fertige Baueinheit Statorzahn mit Spule in die Leiterplatte gesteckt und fixiert wird. So kann ein Kupferfüllfaktor der Spulen bzw. des Spulenwickelraums von über 60% erreicht werden.

Die in Fig. 3 und 6 gezeigten Geometrien entsprechend der Anordnung der Aussparungen, also einmal eine lineare Anordnung und einmal eine Anordnung in einer Klothoidenform, sollen lediglich als beispielhaft und nicht als einschränkend verstanden werden. In nicht gezeigten Ausführungsformen können beliebige Geometrien entsprechend einer Anordnung der Aussparungen vorgesehen sein. Solche Geometrien können beispielsweise ein Bogen, ein Kreis oder ein Kreissegment sein. Für bogenförmige Geometrien werden vorzugsweise trapezförmige Statorzähne verwendet. Auch können vorzugsweise dreidimensionale geometrische Anordnungen vorgesehen sein, insofern die Halteeinrichtungen entsprechende dreidimensionale Geometrien aufweisen.

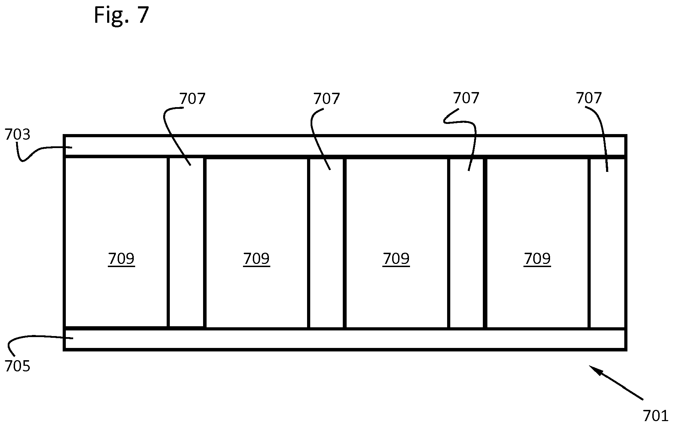

Fig. 7 zeigt eine weitere Statorvorrichtung 701 in einer Draufsicht.

Die Statorvorrichtung 701 umfasst eine erste Leiterplatte 703 und eine zweite Leiterplatte 705 als erste und zweite Halteeinrichtungen eines Haltemoduls. Die beiden Leiterplatten 703 und 705 sind parallel zueinander und gegenüberliegend angeordnet. Beide Leiterplatten 703 und 705 weisen entsprechend erste und zweite Aussparungen auf, welche gegenüberliegend angeordnet sind. Diese Aussparungen sind in Fig. 7 nicht gezeigt. In diesen Aussparungen sind Statorzähne 707 gesteckt, wobei um jeden zweiten Statorzahn 707 eine Spule 709 gewickelt ist. Da die Spule 709 den entsprechenden Statorzahn 707 verdeckt, ist dieser in den Spulen 709 nicht explizit eingezeichnet. Das heißt also insbesondere, dass alternierend eine Spule 709 und ein ungewickelter Statorzahn 707 vorgesehen sind. Das heißt also insbesondere, dass alternierend jeweils ein gewickelter Statorzahn und ein nicht gewickelter beziehungsweise ungewickelter Statorzahn vorgesehen sind.

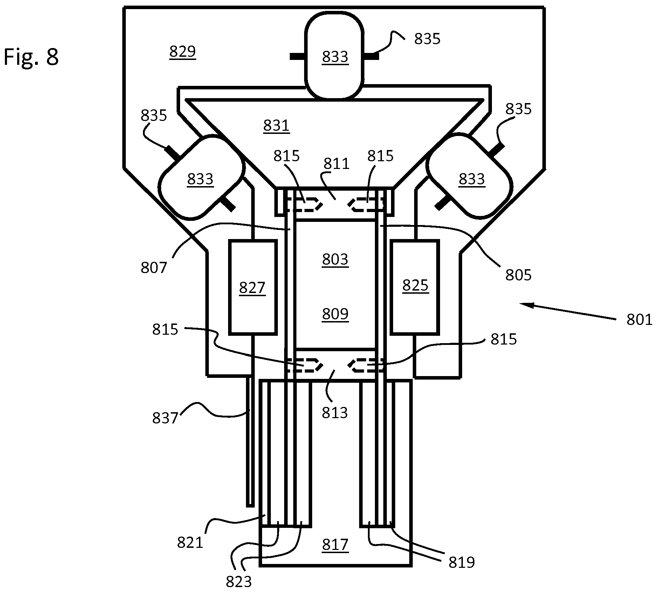

Fig. 8 zeigt ein lineares Transportsystem 801 in einer frontalen Querschnittsansicht.

Das lineare Transportsystem 801 umfasst eine Statorvorrichtung 803. Die Statorvorrichtung 803 umfasst eine erste Leiterplatte 805 und eine zweite Leiterplatte 807 als erste respektive zweite Halteeinrichtung eines Haltemoduls, welche parallel zueinander und gegenüberliegend angeordnet sind. Die Statorvorrichtung 803 mit den beiden Leiterplatten 805 und 807 kann insbesondere analog zu der Statorvorrichtung 701 mit den beiden Leiterplatten 703 und 705 gemäß Fig. 7 gebildet sein. Entsprechende in Zusammenhang mit Fig. 7 gemachten Ausführungen gelten vorzugsweise analog für die Statorvorrichtung 803.

Ein Bereich zwischen den beiden Leiterplatten 805 und 807 der Statorvorrichtung 803 ist mit dem Bezugszeichen 809 gekennzeichnet und kann als ein Spulenbereich bezeichnet werden, insofern in diesem Bereich mehrere Spulen angeordnet sind. Hierbei sind diese Spulen um Statorzähne gewickelt, welche in entsprechende Aussparungen der beiden Leiterplatten 805 und 807 gesteckt sind. Hier kann wiederum auf die Fig. 7 verwiesen werden, in der eine solche Spulenanordnung übersichtlich gezeigt ist.

Oberhalb des Spulenbereichs 809 ist ein Profilelement 811 als Aufnahmeeinrichtung gebildet. Unterhalb des Spulenbereichs 809 ist ebenfalls ein Profilelement 813 gebildet, welches parallel zu dem Profilelement 811 verläuft. Die beiden Profilelemente 811 und 813 weisen eine Längsausdehnung analog zu den beiden Leiterplatten 805 und 807 auf, so dass mittels Schrauben 815 die beiden Leiterplatten 805 und 807 an die beiden Profilelemente 811 und 813 geschraubt werden können. Hierfür weisen die beiden Leiterplatten 805 und 807 entsprechende hier nicht gezeigte Löcher auf. Beide Profilelemente 811 und 813 stützen in vorteilhafter Weise die beiden Leiterplatten 805 und 807 und bewirken in vorteilhafter Weise insbesondere eine mechanische Stabilisierung der Statorvorrichtung 803. Beide Profilelemente 811 und 813 können insofern vorzugsweise auch als Stützprofilelemente bezeichnet werden. Beide Profilelemente 811 und 813 sind insbesondere in einem ausreichenden nahen Abstand für eine thermische Kopplung zwischen den Spulen und den Profilelementen 811 und 813 angeordnet, so dass in vorteilhafter Weise thermische Energie, welche im Betrieb der Spulen, also insbesondere bei Bestromung, gebildet wird, abgeführt werden kann, so dass eine Überhitzung der Spulen wirksam vermieden werden kann. Beide Profilelemente 811 und 813 können insofern auch vorzugsweise als ein thermischer Energieabführer zum Abführen von thermischer Energie bezeichnet werden.

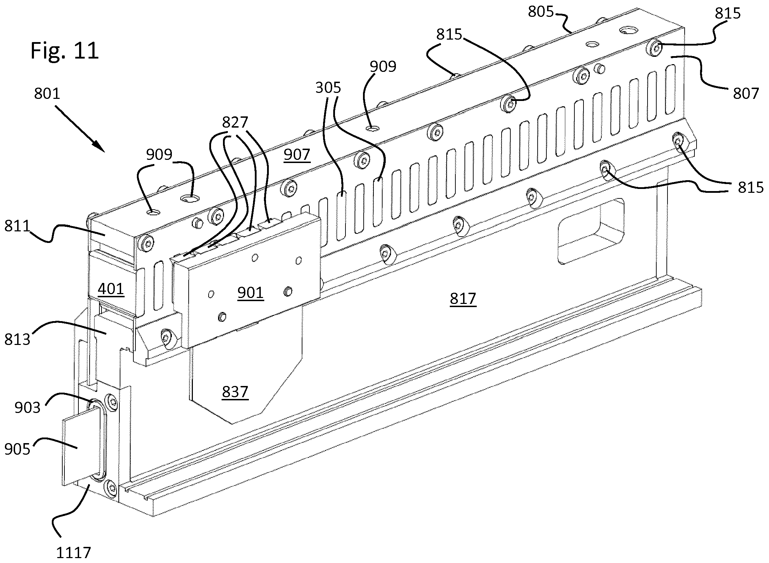

Unterhalb des Profilelements 813 ist ein Trägerprofilelement 817 als ein Trägermodul gebildet, auf welchem das Profilelement 813 angeordnet beziehungsweise befestigt ist. Das heißt also insbesondere, dass das Trägerprofilelement 817 die Statorvorrichtung 803 trägt. In einer beispielsweise in Fig. 11 gezeigten Ausführungsform sind das Profilelement 813 und das Trägerprofilelement 817 als Abwandlung des linearen Transportsystems 801 gemäß Fig. 8 als ein gemeinsames Profilelement gebildet und bilden somit das Trägermodul. Das Trägerprofilelement 817 kann insbesondere einen Hohlraum, auch Einbauraum genannt, aufweisen, in welchem die beiden Leiterplatten 805 und 807 hineinragen, wobei in diesem Hohlraum beziehungsweise Einbauraum elektronische Komponenten wie zum Beispiel eine Leistungselektronik 819 und/oder eine Positionserfassungssystemelektronik 823 eines Positionserfassungssystems angeordnet sein können. Ein solcher Hohlraum ist hier analog insbesondere benachbart zu dem Bereich 313 der Leiterplatte 303 gemäß der Statorvorrichtung 301 in Fig. 3 gebildet. Das Element mit dem Bezugszeichen 821 kennzeichnet eine Leiterplatte der Positionserfassungssystemelektronik 823.

Das lineare Transportsystem 801 umfasst ferner zwei Dauermagnete, welche auch als Permanentmagnete 825 und 827 bezeichnet werden können. Die beiden Permanentmagnete 825 und 827 sind jeweils benachbart zu dem Spulenbereich 809 angeordnet. Das heißt also insbesondere, dass sich der Permanentmagnet 825 rechts von der Leiterplatte 805 befindet. Der Permanentmagnet 827 befindet sich links neben der Leiterplatte 807. Hierbei sind die beiden Permanentmagnete 825 und 827 beabstandet zu den entsprechenden Leiterplatten 805 und 807 angeordnet. Es ist insofern jeweils ein Spalt zwischen den Permanentmagneten 825 und 827 und den Leiterplatten 805 und 807 gebildet. Eine solche Anordnung gemäß Fig. 8 kann daher auch als eine Doppelspaltanordnung bezeichnet werden.

In einer nicht gezeigten Ausführungsform können auch mehrere Permanentmagnete 825 und 827 vorgesehen sein, welche jeweils links und rechts der entsprechenden Leiterplatten 805 und 807 angeordnet sind.

Die Permanentmagnete 825 und 827 sind jeweils von einem hier nicht im Detail dargestellten Träger gehalten, wobei an den beiden Trägern ein Fahrzeug 829 befestigt ist.

Ferner ist auf dem Profilelement 811, also der Aufnahmeeinrichtung, welches sich oberhalb des Spulenbereichs 809 befindet, eine Führung 831 für das Fahrzeug 829 angeordnet.

Die Führung 831 weist eine Trapezform auf, wobei an drei Seiten des Trapezes jeweils eine Laufrolle 833 mit entsprechender Laufachse 835 anliegt. Die Laufrollen 833 sind an dem Fahrzeug 829 angeordnet, so dass hierüber eine rollende Bewegung des Fahrzeugs 829 entlang der Führung 831 ermöglicht ist. Die Ausführung der Laufrollen 833 in Lage, Anordnung, Geometrie und Anzahl kann ohne Einschränkung auch in anderen hier nicht gezeigten Ausführungsformen in beliebiger Variation erfolgen.

In einer nicht gezeigten Ausführungsform kann zusätzlich oder anstelle vorgesehen sein, dass das Fahrzeug magnetgelagert und/oder fluidgelagert, insbesondere gasgelagert, vorzugsweise luftgelagert, entlang der Führung 831 geführt wird.

An dem Träger, welcher den Permanentmagneten 827 hält, ist ein Positionsdetektionselement 837 in Form eines langgestreckten flächigen Elements gebildet. Dieses Element, welches vorzugsweise zumindest teilweise eine metallische oder eine metallisierte Oberfläche umfasst, verläuft verlängernd nach unten weg von dem Fahrzeug 829 in Richtung des Trägerprofilelements 817 und ist gegenüber der Positionserfassungssystemelektronik 823 angeordnet. Die Positionserfassungssystemelektronik 823 ist insbesondere dafür ausgebildet, eine Anwesenheit des Positionsdetektionselements 837 zu detektieren, so dass hierüber in vorteilhafter Weise eine Position des Fahrzeugs 829 bestimmt werden kann. Aus den gemessenen Signalen kann vorzugsweise an anderer Stelle, zum Beispiel mittels einer übergeordneten Steuerung, eine Position berechnet werden.

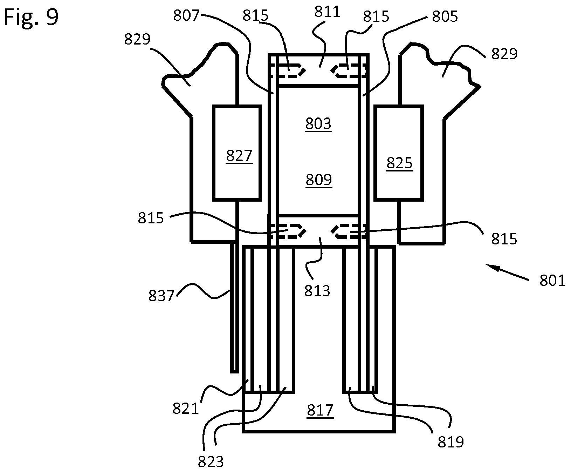

Fig. 9 zeigt das lineare Transportsystem 801 gemäß Fig. 8 in einer etwas vereinfachten Darstellung, insofern hier das Fahrzeug 829 mit der Führung 831 und den Laufrollen 833 nicht als Ganzes dargestellt ist. Es soll hier insbesondere angemerkt werden, dass das lineare Transportsystem 801 auch ohne das Fahrzeug 829 und eine Führung 831 offenbart ist.

In einer nicht gezeigten Ausführungsform kann vorgesehen sein, dass anstelle des Profilelements 811 eine Vergussmasse als Aufnahmeeinrichtung vorgesehen ist, wobei die Vergussmasse die Spulen in dem Spulenbereich 809 umgibt. Das heißt also insbesondere, dass die Spulen mittels der Vergussmasse vergossen sind. In einer solchen Vergussmasse können dann beispielsweise Bohrungen gebildet sein, welche entsprechende Befestigungsmittel wie beispielsweise Schrauben oder Passstifte aufnehmen können, um die Führung 831 an der Vergussmasse als Aufnahmeeinrichtung zu befestigen.

In einer nicht gezeigten Ausführungsform kann vorgesehen sein, dass auf einer solchen Vergussmasse die Aufnahmeeinrichtung angeordnet ist. Eine entsprechende Befestigung kann beispielsweise mittels Schrauben, Nieten und/oder Passstiften in entsprechende Bohrungen der Vergussmasse bewirkt sein.

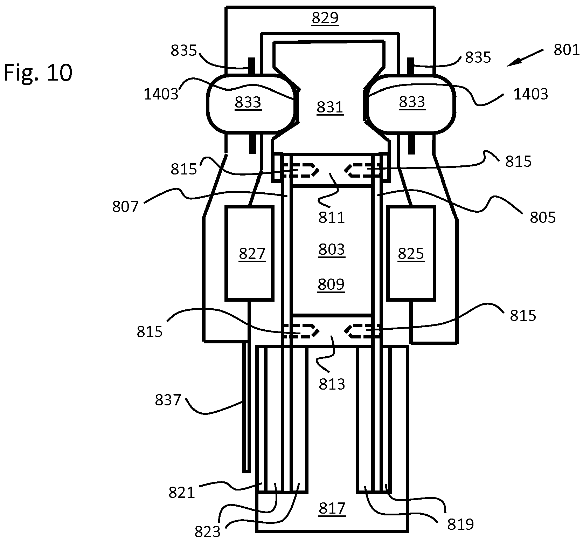

Fig. 10 zeigt ein weiteres lineares Transportsystem 801, welches im Wesentlichen analog zu dem linearen Transportsystem 801 gemäß Fig. 8 gebildet ist.

Als ein Unterschied zu dem linearen Transportsystem 801 gemäß Fig. 8 weist die Führung 831 im Querschnitt zwei gegenüberliegende Verengungen 1403 auf. Das heißt also insbesondere, dass im Querschnitt die Führung 831 eine Sanduhrform aufweist. In diesen Verengungen 1403 können dann in vorteilhafter Weise die Laufrollen 833 anliegen und in diesen Verengungen 1403 entlanglaufen.

Die in Fig. 10 gezeigte Ausführungsformen der Laufrollen 833 in Lage, Anordnung, Geometrie und Anzahl sind nur beispielhaft und nicht einschränkend zu verstehen.

Fig. 11 zeigt eine schräge Draufsicht auf die Abwandlung des linearen Transportsystems 801 gemäß Fig. 8, 9 und 10, wobei hier entsprechend den vorherigen Ausführungen das Fahrzeug 829 und die Führung 831 der Übersicht halber nicht gezeigt sind.

Die Fig. 11 zeigt den Träger 901, welcher mehrere Permanentmagnete 827 hält. Detaillierter gezeigt ist auch das Positionsdetektionselement 837, welches insbesondere als eine Dämpfungsplatine ausgebildet sein kann.

Ferner ist ein Deckelelement 1117 vorgesehen, welches das Trägermodul, welches als gemeinsames Profilelement aus dem Profilelement 813 und dem Trägerprofilelement 817 gebildet ist, über seine Länge abstützt. Das Deckelelement 1117 weist eine Öffnung 903 auf, in welche eine Kontaktierungsleiterplatte 905 geschoben werden kann. Mittels dieser Kontaktierungsleiterplatte 905 ist eine elektrische Kontaktierung der Leiterplatten 805 und/oder 807 ermöglicht.

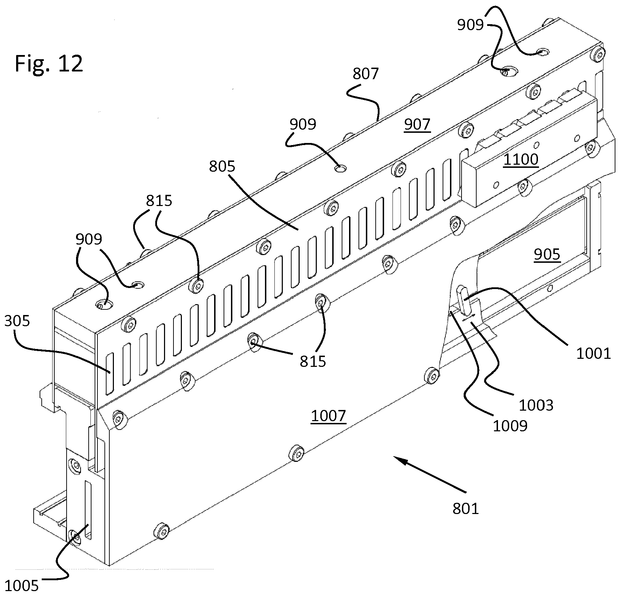

Fig. 12 zeigt eine schräge Draufsicht entsprechend einer Rückansicht bezogen auf die Ansicht gemäß Fig. 11 des linearen Transportsystems 801. An einem dem Längsende mit der Öffnung 903 gegenüberliegenden Längsende ist eine weitere Öffnung 1005 vorgesehen, in welche eine weitere nicht gezeigte Kontaktierungsleiterplatte eines vorangestellten hier nicht gezeigten weiteren linearen Transportsystems eingeschoben werden kann. Somit ist in vorteilhafter Weise eine elektrische Verbindung zu einem weiteren linearen Transportsystem ermöglicht, welches analog zu dem linearen Transportsystem 801 gebildet sein kann. Es kann somit in vorteilhafter Weise ein modulares System gebildet werden, wobei die einzelnen Module aus den linearen Transportsystemen 801 gebildet sein können. Hierbei kann vorzugsweise vorgesehen sein, dass die Führung 831 über mehrere solcher Transportsysteme 801 angeordnet ist, so dass Stoßstellen zwischen den einzelnen Transportsystemen 801 entfallen, was eine Laufruhe eines Fahrzeugs positiv beeinflusst.

Die Öffnung 903 und die weitere Öffnung 1005 sind mittels eines Durchgangs miteinander verbunden, so dass durch das Trägerprofilelement 817 ein Tunnel verläuft. Da in einen solchen Tunnel eine elektronische Komponente wie hier beispielsweise die Kontaktierungsleiterplatte 905 eingeschoben werden kann, kann ein solcher Tunnel auch als ein Einbauraum für eine elektronische Komponente bezeichnet werden. In einer nicht gezeigten Ausführungsform kann vorgesehen sein, dass in dem Tunnel eine Schiene für eine Führung der Kontaktierungsleiterplatte 905 gebildet ist.

Fig. 12 zeigt des Weiteren ein Verschiebemittel 1001, welches mit der Kontaktierungsleiterplatte 905 derart zusammenwirkt, dass dadurch eine Längsverschiebung der Kontaktierungsleiterplatte 905 bewirkt ist. Diese Verschiebung ist hier mittels eines Doppelpfeils mit dem Bezugszeichen 1003 symbolisch gekennzeichnet. Um das Verschiebemittel 1001 sehen zu können, ist in dem entsprechenden Bereich eine lösbar befestigte Abdeckplatte 1007 der Übersicht halber symbolisch aufgeschnitten gezeichnet.

Ferner ist mittels des Bezugszeichens 1009 ein Schlitz gekennzeichnet, welcher in einer Tunnelwand gebildet ist, wobei das Verschiebemittel 1001 in dem Schlitz 1009 aufgenommen ist, so dass das Verschiebemittel 1001 in dem Schlitz 1009 hin und her gleiten kann.

Eine solche Kontaktierungsleiterplatte weist insbesondere folgende Wirkung bzw. Funktion auf. Zwei lineare Transportsysteme können so in Längsrichtung nebeneinander an einem Halteprofil bzw. Trägerplatte befestigt werden, wobei durch das Verschieben der Platine bzw. Kontaktierungsleiterplatte 905 von einem System in das nächste System automatisch das nebenliegende System kontaktiert wird. Das heißt also insbesondere, dass mittels einer Platine 905 zwei lineare Transportsysteme kontaktiert werden können. Hinter der Öffnung 1005 befindet sich beispielsweise ein aus mehreren Federkontakten bestehender Stecker, so dass die eingeschobene Platine 905 in der Position gehalten und kontaktiert wird. Dies bietet insbesondere den Vorteil, dass die einzelnen Module bzw. Transportsysteme im Servicefall zur Seite hin entnommen werden können, ohne die Module auseinanderschieben zu müssen. Weiterhin benötigt das Gesamtsystem umfassend die beiden oder auch noch weitere lineare Transportsysteme dann auch nur eine Anschlussleitung zur Spannungsversorgung und/oder zur Verbindung mit einer übergeordneten Steuerung.

Fig. 11 und 12 zeigen ferner eine Oberfläche 907 des Profilelements 811, wobei die Oberfläche 907 mehrere Aussparungen 909 aufweist, in welchen Schrauben und/oder Nieten und/oder Passstifte gesteckt beziehungsweise geschraubt werden können, um die Führung 831 an dem Profilelement 811, also der Aufnahmeeinrichtung, zu befestigen.

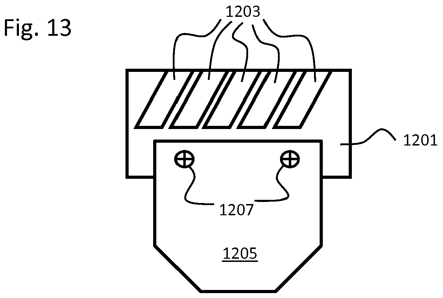

Fig. 13 zeigt einen Träger 1201 umfassend mehrere trapezförmige Permanentmagnete 1203. Der Träger 1201 kann vorzugsweise auch als ein Magnetträger bezeichnet werden.

Unterhalb der Permanentmagnete 1203 ist ein Positionsdetektionselement 1205 angeordnet, welches mittels Schrauben 1207 an dem Träger 1201 verschraubt ist.

Ein solcher Träger 1201 kann insbesondere in dem linearen Transportsystem 801 verwendet werden. Vorzugsweise ist der Träger 901 gemäß Fig. 11 analog zum Träger 1201 gebildet.

Ein Fahrzeug kann dann vorzugsweise an dem Träger 1201 befestigt werden.

Die Trapezform der Permanentmagnete 1203 bewirkt in vorteilhafter Weise kleinere Kraftrippel im Vergleich zu Permanentmagnete in Rechteckform, was weiterhin in vorteilhafter Weise zu einer gleichmäßigeren Bewegung beziehungsweise Verlagerung des Trägers 1201 führt.

In Fig. 12 ist mit dem Bezugszeichen 1100 eine alternative Ausführungsform des Trägers dargestellt, welche analog zum Träger 1201 gemäß Fig. 13 gebildet ist, aber ohne das Positionsdetektionselement 1205.

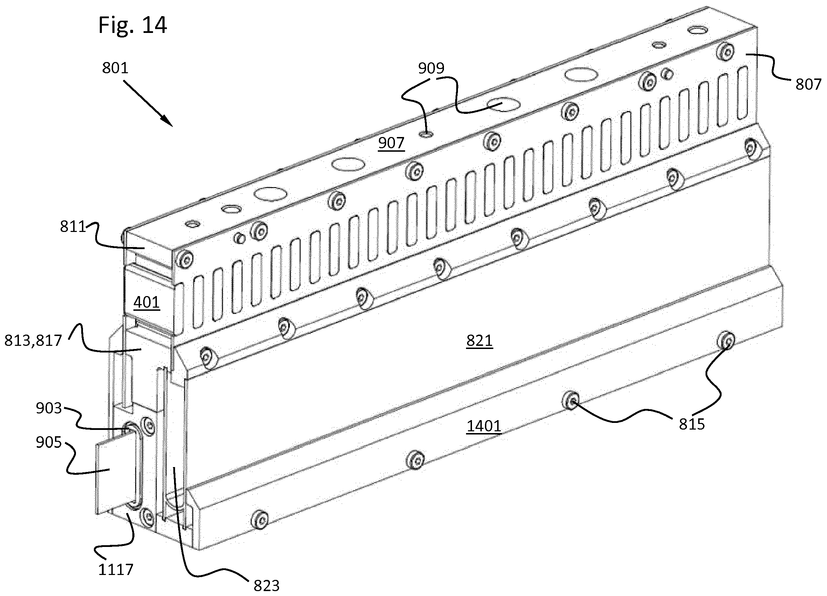

Fig. 14 zeigt eine schräge Draufsicht auf das lineare Transportsystem 801 gemäß den Fig. 8 bis 12, wobei hier zur vereinfachten Darstellung weder das Fahrzeug 829, noch die Führung 831 und auch nicht der Träger 901 gezeigt sind.

Das lineare Transportsystem gemäß Fig. 14 entspricht im Wesentlichen dem in Fig. 11 gezeigten linearen Transportsystems, so dass die zu Fig. 11 gemachten Erläuterungen analog auch für Fig. 14 gelten.

Im Gegensatz zur Darstellung in Fig. 11 ist in Fig. 14 die Leiterplatte 821 der Positionserfassungssystemelektronik 823 dargestellt, welche von einem Halteelement 1401 an dem Trägerprofilelement 817 mittels Schrauben 815 lösbar fixiert ist.

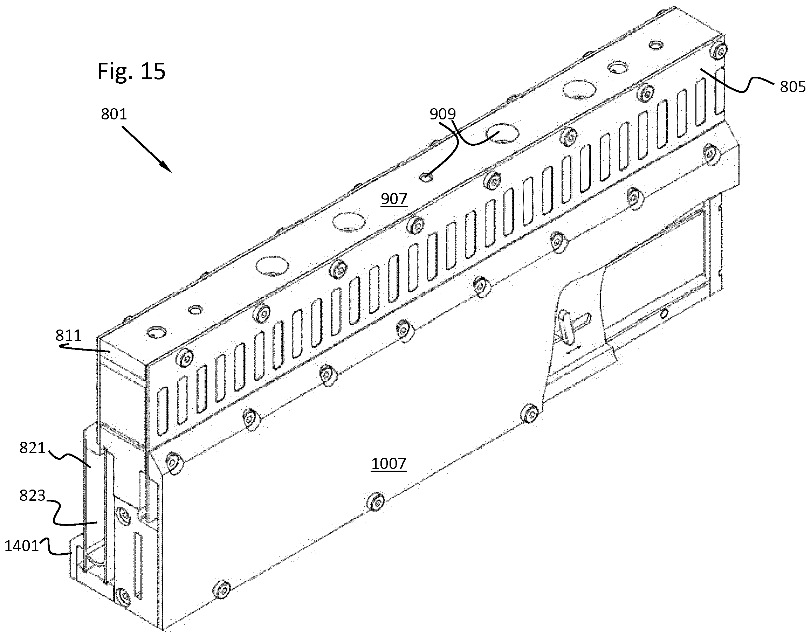

Fig. 15 zeigt eine schräge Draufsicht entsprechend einer Rückansicht bezogen auf die Ansicht gemäß Fig. 14 des linearen Transportsystems 801. Die zu den Fig. 11, 12 und 14 gemachten Erläuterungen zu dem linearen Transportsystem 801 gelten in analoger Weise auch für Fig. 15, so dass zur Vermeidung von Wiederholungen auf die zuvor gemachten Erläuterungen verwiesen wird.

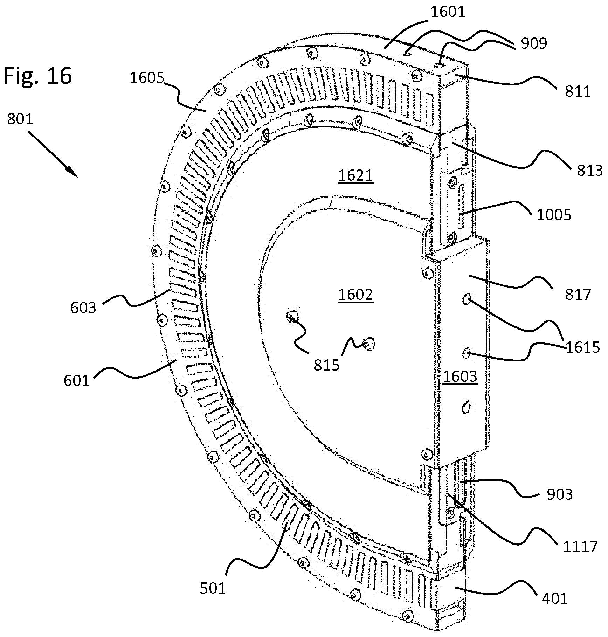

Fig. 16 zeigt ein bogenförmig ausgebildetes lineares Transportsystem 801 gemäß den Fig. 8 bis 12 und 14 bis 15 in einer schrägen Draufsicht, wobei hier ebenfalls zur vereinfachten Darstellung weder das Fahrzeug 829, noch die Führung 831 und auch nicht der Träger 901 gezeigt sind.

Die Leiterplatte 1605 entspricht in ihrem Funktionsumfang der Leiterplatte 805 in Fig. 8, wobei sie aufgrund der Bogenform entsprechend der in Fig. 6 dargestellten Leiterplatte 601 ausgebildet ist. Die zu Fig. 4, 5 und 6 gemachten Erläuterungen gelten in analoger Weise für Fig. 16, so dass zur Vermeidung von Wiederholungen auf die zuvor gemachten Erläuterungen verwiesen wird.

Die Oberfläche 1601 des bogenförmig ausgebildeten Profilelements 811 weist ebenfalls mehrere Aussparungen 909 auf, in welche Schrauben und/oder Nieten und/oder Passstifte gesteckt beziehungsweise geschraubt werden können, um die Führung 831 an dem Profilelement 811, also der Aufnahmeeinrichtung, zu befestigen.

Weiterhin weist das lineare Transportsystem 801 gemäß Fig. 16 eine Leiterplatte 1621 der Positionserfassungssystemelektronik 823 auf, deren Aufbau der zuvor dargestellten und beschriebenen Leiterplatte 821 entspricht. Die Leiterplatte 1621 wird mittels eines Halteelements 1602 an dem Trägerprofilelement 817 mittels Schrauben 815 lösbar fixiert.

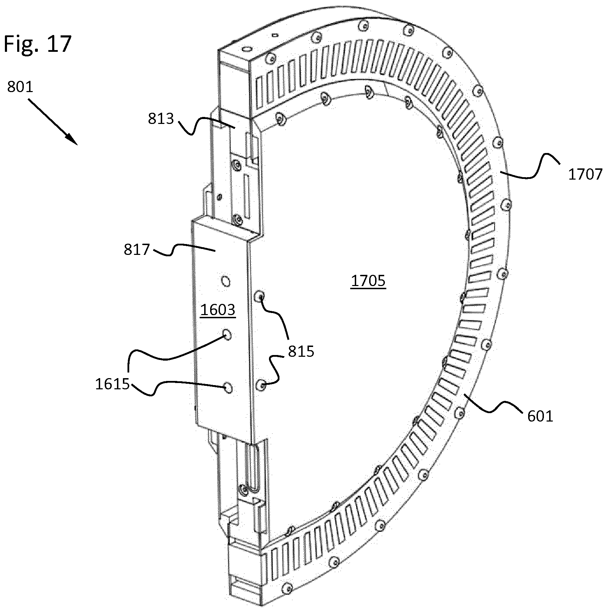

Fig. 17 zeigt eine schräge Draufsicht entsprechend einer Rückansicht bezogen auf die Ansicht gemäß Fig. 16 des linearen Transportsystems 801. Die zu den Fig. 11, 12, 14, 15 und 16 gemachten Erläuterungen zu dem linearen Transportsystem 801 gelten in analoger Weise auch für Fig. 17, so dass zur Vermeidung von Wiederholungen auf die zuvor gemachten Erläuterungen verwiesen wird.

Die Leiterplatte 1707 entspricht in ihrem Funktionsumfang der Leiterplatte 807 in Fig. 8, wobei sie aufgrund der Bogenform entsprechend der in Fig. 6 dargestellten Leiterplatte 601 ausgebildet ist. Die lösbar mittels Schrauben 815 fixierte Abdeckplatte 1705 entspricht in ihrem Aufbau und Funktionsweise der in Fig. 12 dargestellten Abdeckplatte 1007.

Das in den Fig. 16 und 17 dargestellte Trägerprofilelement 817 des bogenförmig ausgebildeten linearen Transportsystems 801 weist einen Vorsprung 1603 auf, der Befestigungsbohrungen 1615 enthält, mittels dessen das lineare Transportsystem an einem nicht dargestellten Maschinengestell lösbar fixiert werden kann.

Oberhalb und unterhalb des Vorsprungs 1603 können beispielsweise gerade ausgebildete lineare Transportsysteme 801 entsprechend der Fig. 11, 12, 14 oder 15 an das bogenförmig ausgebildete lineare Transportsystem 801 gemäß der Fig. 16 oder 17 angereiht werden. Die gerade ausgebildeten linearen Transportsysteme 801 werden dazu ebenfalls an dem nicht dargestellten Maschinengestell lösbar fixiert. Anschließend werden die verschiebbaren Platinen 905 von den Öffnungen 903 in die Öffnungen 1005 verschoben, so dass die einzelnen Module des linearen Transportsystems 801 elektrisch miteinander kontaktiert sind. Auf die Oberflächen 907 und 1601 des Profilelementes 811 werden entsprechend ausgebildete Führungen 831 aufgesetzt und in bekannter Weise mittels der Öffnungen 909 fixiert. Dabei kann die Führung 831 auch eine Mehrzahl an einzelnen linearen Transportsystemen 801 überdecken. Auf die Führungen 831 werden dann die entsprechend ausgebildeten Fahrzeuge 829 aufgesetzt und wie weiter oben beschrieben angetrieben.

Sollte bei einem aus einer Mehrzahl von geraden und/oder bogenförmig ausgebildeten linearen Transportsystemen 801 gebildeten Gesamtsystem ein einzelnes lineares Transportsystem 801 ausgetauscht werden müssen, so wäre zunächst die Verbindung mit der Führung 831 zu lösen. Anschließend würde die verschiebbare Platine 905 zurück in das benachbarte lineare Transportsystem 801 verschoben und die in dem auszutauschenden linearen Transportsystem 801 befindliche verschiebbare Platine 905 würde aus dem anderen benachbarten linearen Transportsystem 801 zurückgezogen. Als letzter Demontageschritt wäre die Fixierung an dem Maschinengestell zu lösen und das auszutauschende lineare Transportsystem 801 ist entnehmbar. Ein neues lineares Transportsystem 801 ist dann in umgekehrter Reihenfolge in das Gesamtsystem integrierbar. Ein Vorteil eines derartigen modularen Aufbaus ist insbesondere darin zu sehen, dass ausschließlich das auszutauschenden lineare Transportsystem von der Führung 831 und dem Maschinengestell gelöst werden muss und die im Gesamtsystem verbleibenden linearen Transportsysteme 801 nicht bearbeitet werden müssen. Dies bringt im Servicefall einen erheblich Zeit- und somit auch Kostenvorteil gegenüber aus dem Stand der Technik bekannten Transportsystemen.

## Patentansprüche

1. Statorvorrichtung (101) für einen Linearmotor, umfassend:
einen elektrisch bestrombaren Magnetfelderzeuger (103) zum Bilden eines Magnetfeldes,
ein Haltemodul (105) zum Halten des Magnetfelderzeugers (103),
wobei der Magnetfelderzeuger (103) an dem Haltemodul (105) befestigt ist,
eine von dem Haltemodul (105) getrennt gebildete Aufnahmeeinrichtung (107),
wobei das Haltemodul (105) an der Aufnahmeeinrichtung (107) befestigt ist,
wobei das Haltemodul (105) eine erste (703, 805) und eine zweite (705, 807) Halteeinrichtung aufweist, an welchen der Magnetfelderzeuger (103) befestigt ist,
wobei der Magnetfelderzeuger (103) zwischen den beiden Halteeinrichtungen (805, 807) angeordnet ist und
wobei die beiden Halteeinrichtungen (805, 807) an gegenüberliegenden Seiten der Aufnahmeeinrichtung (107) befestigt sind
wobei der Magnetfelderzeuger (103) einen Statorzahn (401, 501, 707) und eine um den Statorzahn gewickelte Spule (307, 709) umfasst, wobei der Statorzahn mit einem ersten Ende in eine erste Aussparung der ersten Halteeinrichtung (703, 805) und mit einem zweiten Ende in eine zweite Aussparung der zweiten Halteeinrichtung (705, 807) gesteckt und fixiert ist, und
wobei die Aufnahmeeinrichtung (107) ausgebildet ist, eine Führung (831) zum Führen eines Fahrzeugs (829) zu befestigen,
**dadurch gekennzeichnet, dass**
die erste (703, 805) und/ oder die zweite (705, 807) Halteeinrichtung als Leiterplatten ausgebildet sind.

2. Statorvorrichtung (101) nach Anspruch 1, **dadurch gekennzeichnet, dass** die Aufnahmeeinrichtung (107) zumindest eine Bohrung (909) zur Aufnahme eines die Führung (831) an der Aufnahmeeinrichtung (107) befestigende Befestigungsmittels aufweist.

3. Statorvorrichtung (101) nach Anspruch 1 oder 2, **dadurch gekennzeichnet, dass** die Aufnahmeeinrichtung (107) als ein Profilelement (811) gebildet ist.

4. Statorvorrichtung (101) nach einem der vorherigen Ansprüche, **dadurch gekennzeichnet, dass** die Aufnahmeeinrichtung (107) eine den Magnetfelderzeuger (103) zumindest teilweise umgebende Vergussmasse umfasst.

5. Statorvorrichtung (101) nach einem der vorherigen Ansprüche, **dadurch gekennzeichnet, dass** das Haltemodul (105) an einem Trägermodul (817) zum Tragen des Haltemoduls (105) befestigt ist.

6. Statorvorrichtung (101) nach Anspruch 5, **dadurch gekennzeichnet, dass** das Trägermodul (817) einen Einbauraum für eine elektronische Komponente umfasst.

7. Statorvorrichtung (101) nach Anspruch 6, **dadurch gekennzeichnet, dass** in dem Einbauraum eine Schiene für eine Führung (831) der elektronischen Komponente gebildet ist.

8. Statorvorrichtung (101) nach Anspruch 6 oder 7, dadurch gekennzeichet, dass der Einbauraum einen Schlitz (1009) zur Aufnahme eines Verschiebungsmittels (1001) zum Verschieben der elektronischen Komponente umfasst.

9. Statorvorrichtung (101) nach einem der Ansprüche 6 bis 8, **dadurch gekennzeichnet, dass** der Einbauraum als ein durch das Trägermodul (817) verlaufender Tunnel gebildet ist.

10. Statorvorrichtung (101) nach einem der Ansprüche 6 bis 9, **dadurch gekennzeichnet, dass** in dem Einbauraum ein Stecker für die elektronische Komponente gebildet ist, welcher mit dem Magnetfelderzeuger (103) elektrisch verbunden ist.

11. Statorvorrichtung (101) nach einem der vorherigen Ansprüche, **dadurch gekennzeichnet, dass** ein Parameterspeicher für Ansteuerparameter des Magnetfelderzeugers (103) vorgesehen ist.

12. Statorvorrichtung (101) nach einem der vorherigen Ansprüche, **dadurch gekennzeichnet, dass** ein Sensor zum Messen eines Betriebsparameters des Magnetfelderzeugers (103) vorgesehen ist.

13. Statorvorrichtung (101) nach einem der vorherigen Ansprüche, **dadurch gekennzeichnet, dass** die Führung (831) zum Führen eines Fahrzeugs (829) oberhalb des Magnetfelderzeugers (103) angeordnet und an der Aufnahmeeinrichtung (107) befestigt ist.

14. Lineares Transportsystem (201), umfassend eine Statorvorrichtung (101) nach einem der vorherigen Ansprüche und einen Träger (203) für ein Fahrzeug (829), wobei der Träger (203) zumindest ein Reaktionsteil (205) umfasst, welches ausgebildet ist, mit dem mittels des Magnetfelderzeugers (103) der Statorvorrichtung (101) gebildeten Magnetfeld wechselzuwirken.

15. Lineares Transportsystem (201) nach Anspruch 14, wobei das Reaktionsteil (205) zumindest einen Permanentmagneten (825, 827) umfasst.

## Claims

1. Stator device (101) for a linear motor, comprising:
an electrically energizable magnetic field generator (103) for forming a magnetic field,
a holding module (105) for holding the magnetic field generator (103),
wherein the magnetic field generator (103) is fastened to the holding module (105),
a mounting device (107) which is formed separately from the holding module (105),
wherein the holding module (105) is fastened to the mounting device (107),
wherein the holding module (105) has a first (703, 805) and a second (705, 807) holding device to which the magnetic field generator (103) is fastened,
wherein the magnetic field generator (103) is arranged between the two holding devices (805, 807), and
wherein the two holding devices (805, 807) are fastened to opposite sides of the mounting device (107), wherein the magnetic field generator (103) comprises a stator tooth (401, 501, 707) and a coil (307, 709) wound around the stator tooth, wherein the stator tooth is inserted and fixed by way of a first end into a first recess of the first holding device (703, 805) and by way of a second end into a second recess of the second holding device (705, 807), and
wherein the mounting device (107) is designed for the fastening of a guide (831) for guiding a vehicle (829),
**characterized in that**
the first (703, 805) and/or the second (705, 807) holding device are designed as printed circuit boards.

2. Stator device (101) according to Claim 1, **characterized in that** the mounting device (107) has at least one bore (909) for receiving a fastening means that fastens the guide (831) to the mounting device (107).

3. Stator device (101) according to Claim 1 or 2, **characterized in that** the mounting device (107) is in the form of a profile element (811).

4. Stator device (101) according to one of the preceding claims, **characterized in that** the mounting device (107) comprises an encapsulation that at least partially surrounds the magnetic field generator (103).

5. Stator device (101) according to one of the preceding claims, **characterized in that** the holding module (105) is fastened to a support module (817) for supporting the holding module (105).

6. Stator device (101) according to Claim 5, **characterized in that** the support module (817) comprises an installation space for an electronic component.

7. Stator device (101) according to Claim 6, **characterized in that** a rail for a guide (831) of the electronic components is formed in the installation space.

8. Stator device (101) according to Claim 6 or 7, **characterized in that** the installation space comprises a slot (1009) for receiving a displacement means (1001) for the displacement of the electronic components.

9. Stator device (101) according to one of Claims 6 to 8, **characterized in that** the installation space is formed as a tunnel running through the support module (817).

10. Stator device (101) according to one of Claims 6 to 9, **characterized in that** a plug connector for the electronic components is formed in the installation space, which plug connector is electrically connected to the magnetic field generator (103).

11. Stator device (101) according to one of the preceding claims, **characterized in that** a parameter memory is provided for activation parameters of the magnetic field generator (103).

12. Stator device (101) according to one of the preceding claims, **characterized in that** a sensor is provided for measuring an operating parameter of the magnetic field generator (103).

13. Stator device (101) according to one of the preceding claims, **characterized in that** the guide (831) for guiding a vehicle (829) is arranged above the magnetic field generator (103) and is fastened to the mounting device (107).

14. Linear transport system (201) comprising a stator device (101) according to one of the preceding claims and a support (203) for a vehicle (829), wherein the support (203) comprises at least one reaction part (205) which is designed to interact with the magnetic field formed by means of the magnetic field generator (103) of the stator device (101).

15. Linear transport system (201) according to Claim 14, wherein the reaction part (205) comprises at least one permanent magnet (825, 827).

## Revendications

1. Dispositif à stator (101) pour un moteur linéaire comprenant :
un générateur de champ magnétique (103) pouvant être alimenté électriquement en courant, en vue de la formation d'un champ magnétique ;
un module de maintien en place (105) destiné au maintien en place du générateur de champ magnétique (103) ;
dans lequel le générateur de champ magnétique (103) est fixé au module de maintien en place (105) ;
un dispositif de réception (107) formé séparément par rapport au module de maintien en place (105) ;
dans lequel le module de maintien en place (105) est fixé au dispositif de réception (107) ;
dans lequel le module de maintien en place (105) présente un premier (703, 805) et un deuxième (705, 807) mécanisme de maintien en place, auxquels est fixé le générateur de champ magnétique (103) ;
dans lequel le générateur de champ magnétique (103) est disposé entre les deux mécanismes de maintien en place (805, 807) ; et
dans lequel les deux mécanismes de maintien en place (805, 807) sont fixés au niveau de faces opposées du dispositif de réception (107) ;
dans lequel le générateur de champ magnétique (103) comprend une dent de stator (401, 501, 707) et une bobine (307, 709) enroulée autour de la dent de stator, dans lequel la dent de stator est enfichée et fixée avec une première extrémité dans une première cavité du premier mécanisme de maintien en place (703, 805) et avec une deuxième extrémité dans une deuxième cavité du deuxième mécanisme de maintien en place (705, 807) ; et
dans lequel le dispositif de réception (107) est conçu pour fixer un guidage (831) en vue de guider un véhicule (829),
**caractérisé en ce que**
le premier (703, 805) et/ou le deuxième (705, 807) mécanisme de maintien en place sont conçus sous la forme de circuits imprimés.

2. Dispositif à stator (101) selon la revendication 1, **caractérisé en ce que** le dispositif de réception (107) présente tout au moins un alésage (909) destiné à la réception d'un moyen de fixation permettant de fixer le guidage (831) au dispositif de réception (107).

3. Dispositif à stator (101) selon la revendication 1 ou 2, **caractérisé en ce que** le dispositif de réception (107) est conçu sous la forme d'un élément profilé (811).

4. Dispositif à stator (101) selon l'une des revendications précédentes, **caractérisé en ce que** le dispositif de réception (107) comprend une masse de scellement entourant, tout au moins en partie, le générateur de champ magnétique (103).

5. Dispositif à stator (101) selon l'une des revendications précédentes, **caractérisé en ce que** le module de maintien en place (105) est fixé à un module de support (817) en vue de supporter le module de maintien en place (105).

6. Dispositif à stator (101) selon la revendication 5, **caractérisé en ce que** le module de support (817) comprend un compartiment de montage pour un composant électronique.

7. Dispositif à stator (101) selon la revendication 6, **caractérisé en ce qu'**un rail pour un guidage (831) du composant électronique est mis en place dans le compartiment de montage.

8. Dispositif à stator (101) selon la revendication 6 ou 7, **caractérisé en ce que** le compartiment de montage comprend une fente (1009) destinée à la réception d'un moyen de déplacement (1001) en vue du déplacement du composant électronique.

9. Dispositif à stator (101) selon l'une des revendications 6 à 8, **caractérisé en ce que** le compartiment de montage est conçu sous la forme d'un tunnel qui s'étend à travers le module de support (817).

10. Dispositif à stator (101) selon l'une des revendications 6 à 9, **caractérisé en ce qu'**un connecteur mâle est mis en place dans le compartiment de montage pour le composant électronique, lequel connecteur mâle est raccordé électriquement au générateur de champ magnétique (103).

11. Dispositif à stator (101) selon l'une des revendications précédentes, **caractérisé en ce qu'**une mémoire de paramètres est prévue pour les paramètres de commande du générateur de champ magnétique (103).

12. Dispositif à stator (101} selon l'une des revendications précédentes, **caractérisé en ce qu'**un capteur est prévu, lequel est destiné à la mesure d'un paramètre de service du générateur de champ magnétique (103).

13. Dispositif à stator (101) selon l'une des revendications précédentes, **caractérisé en ce que** le guidage (831) destiné au guidage d'un véhicule (829) est disposé au-dessus du générateur de champ magnétique (103) et est fixé au dispositif de réception (107).

14. Système de transport linéaire (201) comprenant un dispositif à stator (101) selon l'une des revendications précédentes et un support (203) pour un véhicule (829), dans lequel le support (203) comprend tout au moins une partie de réaction (205), laquelle est conçue pour interagir avec le champ magnétique formé au moyen du générateur de champ magnétique (103) du dispositif à stator (101).

15. Système de transport linéaire (201) selon la revendication 14, dans lequel la partie de réaction (205) comprend tout au moins un aimant permanent (825, 827).
